(19) Europäisches Patentamt
European Patent Office
Office européen des brevets

(11) **EP 4 607 464 A1**

(12) **EUROPEAN PATENT APPLICATION**
published in accordance with Art. 153(4) EPC

(43) Date of publication:
**27.08.2025 Bulletin 2025/35**

(21) Application number: **23888116.3**

(22) Date of filing: **10.11.2023**

(51) International Patent Classification (IPC):
**G06T 7/80** (2017.01)    **G06V 10/44** (2022.01)

(52) Cooperative Patent Classification (CPC):
**G06T 7/11; G06T 7/73; G06T 7/80; G06V 10/44**

(86) International application number:
**PCT/CN2023/130982**

(87) International publication number:
**WO 2024/099431 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 CN 202211413951**

(71) Applicants:
• **Huawei Technologies Co., Ltd.
Shenzhen, Guangdong 518129 (CN)**
• **University of Science and Technology of China
Anhui 230026 (CN)**

(72) Inventors:
• **LI, Pengkun
Shenzhen, Guangdong 518129 (CN)**
• **JI, Jianmin
Hefei, Anhui 230026 (CN)**
• **JIANG, Yongbin
Shenzhen, Guangdong 518129 (CN)**
• **LI, Xingchen
Hefei, Anhui 230026 (CN)**

(74) Representative: **Goddar, Heinz J.
Boehmert & Boehmert
Anwaltspartnerschaft mbB
Pettenkoferstrasse 22
80336 München (DE)**

(54) **CALIBRATION METHOD BASED ON POINT CLOUD DATA AND IMAGE, AND RELATED APPARATUS**

(57)    A calibration method based on point cloud data and an image is provided, to calibrate an image capture device for photographing an electric power transmission. In this method, geometric features (such as features of a transmission line and a surface shape of a pole tower) related to the electric power transmission is extracted from point cloud data and an image through a shape feature of the electric power transmission, and a geometric feature conversion relationship between the point cloud data and the image is obtained through calculation based on a correspondence between a geometric feature in the point cloud data and a geometric feature in the image, to obtain an extrinsic parameter of the image capture device. In addition, in the solutions, the point cloud data and the image that are related to the electric power transmission are obtained, so that the image capture device can be automatically calibrated without manual participation, thereby effectively improving calibration efficiency of the image capture device and reducing consumption of labor and material resources.

Obtain point cloud data and a first image, where the point cloud data and the first image are obtained by collecting an electric power transmission at different positions — 301

Extract a geometric feature in the point cloud data and a geometric feature in the first image, to obtain a first geometric feature in the point cloud data and a second geometric feature in the first image, where the first geometric feature and the second geometric feature each are related to the electric power transmission — 302

Determine, from the first geometric feature and the second geometric feature, a first target feature and a second target feature that have a correspondence, where the first target feature is a feature in the first geometric feature, and the second target feature is a feature in the second geometric feature — 303

Calculate an extrinsic parameter of an image capture device based on the first target feature and the second target feature, where the image capture device is configured to capture the first image, and the extrinsic parameter indicates a conversion relationship between the first target feature and the second target feature — 304

FIG. 3

EP 4 607 464 A1

**Description**

This application claims priority to Chinese Patent Application No. 202211413951.2, filed with the China National Intellectual Property Administration on November 11, 2022 and entitled "CALIBRATION METHOD BASED ON POINT CLOUD DATA AND IMAGE, AND RELATED APPARATUS", which is incorporated herein by reference in its entirety.

**TECHNICAL FIELD**

This application relates to the field of electric power technologies, and in particular, to a calibration method based on point cloud data and an image, and a related apparatus.

**BACKGROUND**

A top priority for a power grid company in electric power transmission operation and maintenance is to ensure stable running of a power grid and safe transmission of electric energy. However, electric power transmissions are widely distributed with long lines, and exposed to a natural environment for long time, and therefore are vulnerable to being damaged by various potential risk targets (such as large construction machines, cranes, and cement tankers) in some areas (for example, an overhead electric power transmission crosses high-speed railways, highways, and important sections of an electric power transmission). Due to a high voltage of the electric power transmission, once the potential risk target is in contact with or close to the electric power transmission, safety accidents such as conducting wire discharge and breakdown puncture resulting in power outages may occur.

Therefore, for safe purposes, in a smart electric power transmission construction standard of the power grid company, visualization coverage of the electric power transmission needs to be not less than 60%, that is, at least 60% of pole towers need to be installed with a camera for visualized monitoring. Currently, in a method for identifying a potential risk target near the electric power transmission, an image returned by the camera on the pole tower is usually processed by using an artificial intelligence algorithm like computer vision, to identify the potential risk target in the image. Then, for the potential risk target in the image, a distance between the potential risk target and the electric power transmission may be further calculated based on a position of the potential risk target in the image, to determine whether the potential risk target causes harm to the electric power transmission.

Generally, an extrinsic parameter of an image capture device for photographing the image usually needs to be obtained, that is, a conversion relationship between a world coordinate system and a coordinate system of the image capture device needs to be obtained, to calculate the distance between the potential risk target and the electric power transmission based on the position of the potential risk target in the image. In a related technology, a reference point is usually manually selected from the image to calibrate the image capture device, to obtain the extrinsic parameter of the image capture device. However, because the image capture device is deployed on the outdoor pole tower, a position of the image capture device easily changes due to impact of the natural environment, and consequently, the extrinsic parameter of the image capture device drifts. Therefore, in electric power transmission operation and maintenance, operation and maintenance personnel often need to calibrate a large quantity of image capture devices, causing low calibration efficiency of the image capture devices and consuming a large amount of labor and material resources.

**SUMMARY**

This application provides a calibration method based on point cloud data and an image. In the method, point cloud data and an image that are related to an electric power transmission are obtained, so that an image capture device can be automatically calibrated without manual participation, thereby effectively improving calibration efficiency of the image capture device and reducing consumption of labor and material resources.

A first aspect of this application provides a calibration method based on point cloud data and an image, to calibrate an image capture device for photographing an electric power transmission. The method includes: first, obtaining point cloud data and a first image. The point cloud data and the first image are obtained by collecting the electric power transmission at different positions. For example, the point cloud data may be, for example, obtained by scanning the electric power transmission by using a laser scanning device carried on an uncrewed aerial vehicle, for example, a lidar. The first image may be obtained by photographing the electric power transmission by an image capture device (for example, a camera) deployed on a pole tower of the electric power transmission. Therefore, the first image includes the electric power transmission.

Then, a geometric feature in the point cloud data and a geometric feature in the first image are extracted, to obtain a first geometric feature in the point cloud data and a second geometric feature in the first image, where the first geometric feature and the second geometric feature each are related to the electric power transmission. The geometric feature is a feature of a geometric shape, for example, a feature of a geometric shape, for example, a line feature, a point feature, and a plane feature. Specifically, the geometric feature in the point cloud data and the geometric feature in the first image include one or more of the following features: a depth-discontinuous line feature and a plane feature that is related to the pole tower of the electric power transmission. The depth-discontinuous line feature indicates a transmission line, and the plane feature indicates a geometric surface of the pole tower.

Then, a first target feature and a second target feature that have a correspondence are determined from the first geometric feature and the second geometric feature, where the first target feature is a feature in the first geometric feature, and the second target feature is a feature in the second geometric feature. The first target feature and the second target feature each are a specific shape corresponding to a same object. For example, the first target feature and the second target feature each are the line feature, and correspond to a same transmission conducting wire on the electric power transmission.

Finally, an extrinsic parameter of the image capture device is calculated based on the first target feature and the second target feature, where the image capture device is configured to capture the first image, and the extrinsic parameter indicates a conversion relationship between the first target feature and the second target feature. The first target feature is a three-dimensional feature in a world coordinate system, and the second target feature is a two-dimensional feature in a camera coordinate system. Therefore, the extrinsic parameter of the image capture device can be derived based on the first target feature and the second target feature. The extrinsic parameter can convert the first target feature into the second target feature, that is, the extrinsic parameter indicates a conversion relationship between the first target feature and the second target feature.

In this solution, geometric features (such as features of a power transmission line, an intersection point between the transmission line and a pole tower, and a surface shape of the pole tower) related to an electric power transmission is extracted from point cloud data and an image through a shape feature of the electric power transmission, and a geometric feature conversion relationship between the point cloud data and the image is obtained through calculation based on a correspondence between a geometric feature in the point cloud data and a geometric feature in the image, to obtain the extrinsic parameter of the image capture device. In addition, in this solution, the point cloud data and the image that are related to the electric power transmission are obtained, so that the image capture device can be automatically calibrated without manual participation, thereby effectively improving calibration efficiency of the image capture device and reducing consumption of labor and material resources.

In a possible implementation, the first geometric feature includes a first line feature, and a difference between depth values of any two adjacent points in the first line feature is greater than a first threshold. That is, depth values of points in the first line feature change continuously. Because a transmission conducting wire in the electric power transmission is continuous and continuously extend in three-dimensional space, depths of points representing the transmission conducting wire in the point cloud data keep changing. Based on a change of depth values of the points on the line, a line feature indicating the transmission conducting wire can be effectively determined.

In this solution, a depth-discontinuous line feature is extracted from the point cloud data as a geometric feature, so that the line feature that indicates the transmission conducting wire and that is in the point cloud data can be effectively extracted based on the shape feature of the transmission conducting wire. This facilitates subsequent geometric feature matching.

In a possible implementation, the determining, from the first geometric feature and the second geometric feature, a first target feature and a second target feature that have a correspondence includes: first, converting a point in the first geometric feature into a pixel in an image by using a preset extrinsic parameter, to obtain a third geometric feature, where the preset extrinsic parameter is an extrinsic parameter preset by the image capture device. The preset extrinsic parameter is an extrinsic parameter preset by the image capture device, and can indicate a conversion relationship from the world coordinate system to the camera coordinate system. Therefore, based on the preset extrinsic parameter, a three-dimensional point in the first line feature in the world coordinate system can be converted into a two-dimensional pixel in the image that is in the camera coordinate system, that is, a three-dimensional first line feature is converted into a two-dimensional second line feature.

Then, a third target feature and the second target feature are determined based on the third geometric feature and the second geometric feature, where the third target feature is a feature in the third geometric feature, and the third target feature and the second target feature are two features with a highest similarity between the third geometric feature and the second geometric feature. In other words, after the first geometric feature in the point cloud data is projected to the camera coordinate system to obtain a two-dimensional third geometric feature, the third geometric feature is compared with the second geometric feature in the image, to extract two most similar geometric features.

Finally, it is determined that the first target feature corresponding to the third target feature and the second target feature have a correspondence.

In this solution, the three-dimensional geometric feature extracted from the point cloud data is converted into the two-dimensional geometric feature in the camera coordinate system, so that the two-dimensional geometric feature corresponding to the point cloud data can be compared with the geometric feature in the image, to determine geometric features that have a correspondence and that are in the point cloud data and the image. This ensures feasibility of the solution.

In a possible implementation, the determining, from the first geometric feature and the second geometric feature, a first target feature and a second target feature that have a correspondence includes: converting a point in the first line feature into a pixel in an image by using a preset extrinsic parameter, to obtain a second line feature, where the preset extrinsic parameter is an extrinsic parameter preset by the image capture device. The preset extrinsic parameter is an extrinsic parameter preset by the image capture device, and can indicate a conversion relationship from the world coordinate system to the camera coordinate system. Therefore, based on the preset extrinsic parameter, the three-dimensional point in the first line feature in the world coordinate system can be converted into the two-dimensional pixel in the image in the camera coordinate system, that is, the three-dimensional first line feature is converted into the two-dimensional second line feature.

Then, a third line feature most similar to the second line feature is determined from the second geometric feature, and it is determined that the first line feature belongs to the first target feature and the third line feature belongs to the second target feature.

In this solution, the three-dimensional line feature extracted from the point cloud data is converted into the two-dimensional line feature in the camera coordinate system, so that the two-dimensional line feature corresponding to the point cloud data can be compared with the line feature in the image, to determine line features that have a correspondence and that are in the point cloud data and the image. This ensures feasibility of the solution.

In a possible implementation, the first geometric feature includes a point feature; and the extracting a geometric feature in the point cloud data, to obtain a first geometric feature in the point cloud data specifically includes: converting a point in the point cloud data into a pixel in the image by using a preset extrinsic parameter, to obtain a second image, where the preset extrinsic parameter is an extrinsic parameter preset by the image capture device; and detecting a point of interest in the second image, and determining a point that is in the point cloud data and that corresponds to the point of interest, to obtain the first geometric feature.

In conclusion, in this solution, the point in the point cloud data is first converted into the pixel in the second image, then point features are extracted on the first image and the second image in a same manner, and the point features extracted from the first image and the second image are matched. Finally, point features that have a correspondence and that are in the point cloud data and the first image is determined based on the point in the point cloud data and the point in the second image.

In a possible implementation, the first geometric feature includes at least one three-dimensional plane feature, and the second geometric feature includes at least one two-dimensional plane feature; and
the determining, from the first geometric feature and the second geometric feature, a first target feature and a second target feature that have a correspondence includes: converting the at least one three-dimensional plane feature into at least one two-dimensional projection plane feature by using the preset extrinsic parameter; and matching the at least one two-dimensional projection plane feature with the at least one two-dimensional plane feature, to determine the first target feature and the second target feature that match with each other, where the first target feature includes a feature in the at least one two-dimensional projection plane feature, and the second target feature includes a feature in the at least one two-dimensional plane feature.

In other words, in a process of determining plane features that have a correspondence and that are in the point cloud data and the first image, the plane features in the point cloud data and in the first image may be first extracted, then a plane feature extracted from the point cloud data is converted into a projection plane feature in the camera coordinate system, and finally the plane features that have a correspondence and that are in the point cloud data and the first image is determined by matching the projection plane feature and the plane feature in the first image.

In a possible implementation, before the geometric feature in the point cloud data and the geometric feature in the first image are extracted, semantic segmentation is performed on the point cloud data and the first image, to obtain a first semantic segmentation result corresponding to the point cloud data and a second semantic segmentation result corresponding to the first image. The first semantic segmentation result indicates a category of each point in the point cloud data, and the second semantic segmentation result indicates a category of each pixel in the first image.

Data of a preset category in the point cloud data is filtered out based on the first semantic segmentation result, to obtain updated point cloud data; and a part of the preset category in the first image is removed based on the second semantic segmentation result, to obtain an updated first image. For example, the preset category may be a category that easily changes with time, for example, a pedestrian, a car, or a tree. By filtering out content of the preset category in the point cloud data and the first image, an unstable feature can be effectively filtered out, to ensure that geometric features that have a correspondence and that are in the point cloud data and the first image can be accurately extracted and determined subsequently.

In this way, the extracting a geometric feature in point cloud data and a geometric feature in the first image specifically includes: extracting geometric features in the updated point cloud data and in the updated first image.

In this solution, before the geometric feature in the point cloud data and the geometric feature in the first image are extracted, content that is in the point cloud data and the first image and that easily affects a process of determining geometric features that have a correspondence may be first identified through a semantic segmentation network, and this part of content is filtered out, to ensure that the geometric features that have a correspondence and that are in the point cloud data and the first image can be accurately extracted and determined subsequently.

In a possible implementation, the first image includes a potential risk target. The method further includes: determining a distance between the potential risk target and the electric power transmission based on the extrinsic parameter and a position of the potential risk target in the first image.

In a possible implementation, the method further includes: obtaining a third image, where the third image is a background image corresponding to the first image; and determining, based on the first image and the third image, the position of the potential risk target in the first image according to a background subtraction method.

In this solution, the background image corresponding to the first image is obtained, and the potential risk target in the first image is determined according to the background subtraction method. Compared with a conventional artificial intelligence recognition method, in this solution, a position of the potential risk target can be simply and effectively determined, and fewer computing resources are required.

In a possible implementation, the third image includes the electric power transmission and does not include the potential risk target; or

values of all pixels in the third image are a second threshold, and the second threshold is an average value of all pixel values in the first image.

In a possible implementation, the potential risk target includes a first part and a second part, one end of the first part is in perpendicular contact with the ground, the other end of the first part is connected to one end of the second part, and there is an included angle between the second part and a photographing plane of the first image. For example, the potential risk target may be a tower crane, a crane, or a firefighting ladder, the first part may be a support column of the tower crane, and the second part may be a crane arm of the tower crane.

For the potential risk target including the first part and the second part, that the distance between the potential risk target and the electric power transmission is determined specifically includes: obtaining a preset length corresponding to the second part, where the preset length is determined by identifying a category of the potential risk target. For example, it is assumed that the potential risk target is the tower crane, and the preset length of the second part of the potential risk target may be, for example, 50 m; and it is assumed that the potential risk target is the crane, and the preset length of the second part of the potential risk target may be, for example, 40 m.

Then, a position of a potential risk point in the world coordinate system is determined based on the extrinsic parameter, the preset length, and the length of the second part in the first image, where the potential risk point is located at the other end of the second part (namely, an end that is in the second part and that is not connected to the first part).

Finally, the distance between the potential risk point and the electric power transmission is determined based on the position of the potential risk point in the world coordinate system.

In a possible implementation, the distance between the potential risk point and the electric power transmission is marked in the first image, so that operation and maintenance personnel can quickly determine the distance between the potential risk point and the electric power transmission.

In a possible implementation, the method further includes: determining a potential risk range based on a position of the end of the second part in the world coordinate system and a preset length corresponding to the second part, where the potential risk range is a range that can be reached by the potential risk point. In other words, when the end of the second part is fastened and the other end of the second part can move around the fastened point, a range to which the potential risk point on the other end of the second part can move is the potential risk range. A position of the end of the second part in the world coordinate system is determined based on the extrinsic parameter and a position of the end of the second part in the first image.

A distance between a point in the potential risk range and the electric power transmission is calculated, and first alarm information is generated when the distance between the point in the potential risk range and the electric power transmission is less than a first safe distance. The first safe distance may be determined according to a running standard of the electric power transmission, and is specifically related to a power transmission voltage of the electric power transmission. The first safe distance may be specified by the operation and maintenance personnel in advance.

In this solution, the potential risk range that can be reached by the potential risk point in the potential risk target is determined based on a length of the second part of the potential risk target, to determine whether a distance between a point in the potential risk range and the electric power transmission is less than a safe distance, and to determine whether the potential risk target causes harm to the electric power transmission during operating. This eliminates a potential risk in time and avoids harm caused by the potential risk target to the electric power transmission during operating.

In a possible implementation, the method further includes: determining, based on the extrinsic parameter and a position of a contact point in the first image, a position of the contact point in the world coordinate system, where the contact point is a point at which the potential risk target is in contact with the ground; and calculating, based on the position of the contact point in the world coordinate system, a distance between the contact point and an overhead power line protection area, and generating second alarm information when the distance between the contact point and the overhead power line protection area is less than a second safe distance.

A second aspect of this application provides a calibration apparatus based on point cloud data and an image, including:

an obtaining module, configured to obtain point cloud data and a first image, where the point cloud data and the first image are obtained by collecting an electric power transmission at different positions;

an extraction module, configured to extract a geometric feature in the point cloud data and a geometric feature in the first image, to obtain a first geometric feature in the point cloud data and a second geometric feature in the first image, where the first geometric feature and the second geometric feature each are related to the electric power transmission, and the geometric feature in the point cloud data and the geometric feature in the first image include one or more of the following features: a depth-discontinuous line feature and a plane feature that is related to a pole tower of the electric power transmission; and

a processing module, configured to determine, from the first geometric feature and the second geometric feature, a first target feature and a second target feature that have a correspondence, where the first target feature is a feature in the first geometric feature, and the second target feature is a feature in the second geometric feature, where

the processing module is further configured to calculate an extrinsic parameter of an image capture device based on the first target feature and the second target feature, where the image capture device is configured to capture the first image, and the extrinsic parameter indicates a conversion relationship between the first target feature and the second target feature.

In a possible implementation, the processing module is further configured to:

convert a point in the first geometric feature into a pixel in an image by using a preset extrinsic parameter, to obtain a third geometric feature, where the preset extrinsic parameter is an extrinsic parameter preset by the image capture device;

determine a third target feature and the second target feature based on the third geometric feature and the second geometric feature, where the third target feature is a feature in the third geometric feature, and the third target feature and the second target feature are two features with a highest similarity between the third geometric feature and the second geometric feature; and

determine that the first target feature corresponding to the third target feature and the second target feature have a correspondence.

In a possible implementation, the first geometric feature includes a first line feature, and a difference between depth values of any two adjacent points in the first line feature is greater than a first threshold.

In a possible implementation, the first geometric feature includes a point feature; and

the extraction module is specifically configured to:

convert a point in the point cloud data into a pixel in an image by using a preset extrinsic parameter, to obtain a second image, where the preset extrinsic parameter is an extrinsic parameter preset by the image capture device; and

detect a point of interest in the second image, and determine a point, that is in the point cloud data and that corresponds to the point of interest, to obtain the first geometric feature.

In a possible implementation, the first geometric feature includes at least one three-dimensional plane feature, and the second geometric feature includes at least one two-dimensional plane feature; and

the processing module is specifically configured to:

convert the at least one three-dimensional plane feature into at least one two-dimensional projection plane feature by using the preset extrinsic parameter; and

match the at least one two-dimensional projection plane feature with the at least one two-dimensional plane feature, to determine the first target feature and the second target feature that match with each other, where the first target feature includes a feature in the at least one two-dimensional projection plane feature, and the second target feature includes a feature in the at least one two-dimensional plane feature.

In a possible implementation, the processing module is further configured to:

perform semantic segmentation on the point cloud data and the first image, to obtain a first semantic segmentation result corresponding to the point cloud data and a second semantic segmentation result corresponding to the first image;

filter out, based on the first semantic segmentation result, data of a preset category in the point cloud data, to obtain updated point cloud data; and

remove, based on the second semantic segmentation result, a part of the preset category in the first image, to obtain an updated first image; and

the extraction module is further configured to extract a geometric feature in the updated point cloud data and a geometric feature in the updated first image.

In a possible implementation, the first image includes a potential risk target; and

the processing module is further configured to determine a distance between the potential risk target and the electric power transmission based on the extrinsic parameter and a position of the potential risk target in the first image.

In a possible implementation, the obtaining module is further configured to obtain a third image, where the third image is a background image corresponding to the first image; and

the processing module is further configured to determine, based on the first image and the third image, the position of the potential risk target in the first image according to a background subtraction method.

In a possible implementation, the third image includes the electric power transmission and does not include the potential risk target; or

values of all pixels in the third image are a second threshold, and the second threshold is an average value of all pixel values in the first image.

In a possible implementation, the potential risk target includes a first part and a second part, one end of the first part is in perpendicular contact with the ground, the other end of the first part is connected to one end of the second part, and there is an included angle between the second part and a photographing plane of the first image;

the obtaining module is further configured to obtain a preset length corresponding to the second part, where the preset length is determined by identifying a category of the potential risk target; and

the processing module is further configured to:

determine a position of a potential risk point in a world coordinate system based on the extrinsic parameter, the preset length, and a length of the second part in the first image, where the potential risk point is located at the other end of the second part; and

determine a distance between the potential risk point and the electric power transmission based on the position of the potential risk point in the world coordinate system.

In a possible implementation, the processing module is further configured to mark the distance between the potential risk point and the electric power transmission in the first image.

In a possible implementation, the processing module is further configured to:

determine a potential risk range based on a position of the end of the second part in the world coordinate system and the preset length corresponding to the second part, where the potential risk range is a range that can be reached by the potential risk point, and the position of the end of the second part in the world coordinate system is determined based on the extrinsic parameter and a position of the end of the second part in the first image; and

calculate a distance between a point in the potential risk range and the electric power transmission, and generate first alarm information when the distance between the point in the potential risk range and the electric power transmission is less than a first safe distance.

In a possible implementation, the processing module is further configured to:

determine, based on the extrinsic parameter and a position of a contact point in the first image, a position of the contact point in the world coordinate system, where the contact point is a point at which the potential risk target is in contact with the ground; and

calculate, based on the position of the contact point in the world coordinate system, a distance between the contact point and an overhead power line protection area, and generate second alarm information when the distance between the contact point and the overhead power line protection area is less than a second safe distance.

A third aspect of this application provides a calibration apparatus based on point cloud data and an image. The apparatus may include a processor, and the processor is coupled to a memory. The memory stores program instructions. When the program instructions stored in the memory are executed by the processor, the method according to any one of the first aspect or the implementations of the first aspect is implemented. For steps performed by the processor in the possible implementations of the first aspect, refer to the first aspect. Details are not described herein again.

A fourth aspect of this application provides a computer-readable storage medium. The computer-readable storage medium stores a computer program, and when the computer program is run on a computer, the computer performs the method according to any one of the first aspect or the implementations of the first aspect.

A fifth aspect of this application provides a circuit system, where the circuit system includes a processing circuit, and the processing circuit is configured to perform the method according to any one of the first aspect or the implementations of the first aspect.

A sixth aspect of this application provides a computer program product. When the computer program product runs on a computer, the computer is enabled to perform the method according to any one of the first aspect or the implementations of the first aspect.

A seventh aspect of this application provides a chip system. The chip system includes a processor, configured to support a server or a threshold obtaining apparatus in implementing a function according to any one of the first aspect or the implementations of the first aspect, for example, sending or processing data and/or information in the foregoing method. In a possible design, the chip system further includes a memory, and the memory is configured to store program instructions and data that are necessary for a server or a communication device. The chip system may include a chip, or may include a chip and another discrete device.

For beneficial effect of the second aspect to the seventh aspect, refer to the descriptions of the first aspect. Details are not described the herein again.

**BRIEF DESCRIPTION OF DRAWINGS**

FIG. 1A is a diagram of an application scenario according to an embodiment of this application;

FIG. 1B is a diagram of another application scenario according to an embodiment of this application;

FIG. 2 is a diagram of a structure of an electronic device 101 according to an embodiment of this application;

FIG. 3 is a schematic flowchart of a calibration method based on point cloud data and an image according to an embodiment of this application;

FIG. 4 is a diagram of an image related to an electric power transmission according to an embodiment of this application;

FIG. 5 is a diagram of extracting a line feature from point cloud data according to an embodiment of this application;

FIG. 6 is a diagram of a process of performing semantic segmentation on point cloud data according to an embodiment of this application;

FIG. 7 is a diagram of a process of performing semantic segmentation on a first image according to an embodiment of this application;

FIG. 8 is a schematic flowchart of a calibration method based on point cloud data and an image according to an embodiment of this application;

FIG. 9 is a diagram of determining a position of a potential risk target according to an embodiment of this application;

FIG. 10 is a diagram of a camera imaging principle according to an embodiment of this application;

FIG. 11 is a diagram of a crane arm at different positions according to this embodiment of this application;

FIG. 12 is a diagram of determining coordinates of a potential risk point in a potential risk target according to an embodiment of this application;

FIG. 13 is a diagram of displaying a distance between a potential risk target and an electric power transmission according to an embodiment of this application;

FIG. 14 is a diagram of comparison between fields of views before and after a camera drifts according to an embodiment of this application;

FIG. 15 is a diagram of a structure of a calibration apparatus based on point cloud data and an image according to an embodiment of this application;

FIG. 16 is a diagram of a structure of an execution device according to an embodiment of this application;

FIG. 17 is a diagram of a structure of a chip according to an embodiment of this application; and

FIG. 18 is a diagram of a structure of a computer-readable storage medium according to an embodiment of this application.

**DESCRIPTION OF EMBODIMENTS**

The following describes embodiments of this application with reference to accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is only a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

For ease of understanding, the following first describes some technical terms used in embodiments of this application.

(1) Electric power transmission

The electric power transmission is a line for electric energy transmission over a long distance. The electric power transmission usually includes a pole tower, a transmission conducting wire, an insulating spacer, an overhead power line fitting, a stay wire, a pole tower foundation, and a grounding device, and is installed above the ground. Generally, the pole tower is perpendicularly installed on the ground, and an overhead transmission conducting wire is deployed between pole towers.

(2) Potential risk target

The potential risk target is an object that easily damages an electric power transmission, for example, a large construction machine, a crane, a tower crane, a firefighting ladder, a cement tanker, a tree barrier, and a firework.

(3) Point cloud data (point cloud data)

The point cloud data is a set of a group of vectors in a three-dimensional coordinate system. Usually, the point cloud data is obtained by scanning an environment by using a laser scanner (for example, a lidar). In addition, the point cloud data is recorded in a form of points, and each point includes three-dimensional coordinates. In some cases, a point in the point cloud data may include color information or reflection intensity information. The reflection intensity information is an echo intensity collected by a receiving apparatus of the laser scanner. The reflection intensity information is related to a surface material, roughness, an incident angle direction of a target, emission energy of an instrument, and laser wavelength.

(4) Extrinsic parameter of an image capture device

The extrinsic parameter of the image capture device is a parameter of the image capture device in a world coordinate system, for example, a position of the image capture device and a rotation direction of the image capture device. Generally, the extrinsic parameter of the image capture device may be represented by using rotation parameters and translation parameters of three axes of the image capture device in the world coordinate system.

(5) Calibration

In an image measurement process and a computer vision application, a geometric model of camera imaging needs to be established to determine a relationship between a three-dimensional geometric position of a point on a surface of a spatial object and a corresponding point of the point in an image. A parameter of the geometric model is an extrinsic parameter of a camera. In most cases, the extrinsic parameter of the camera can be obtained only through experiment and calculation. A process of solving the extrinsic parameter of the camera is referred to as camera calibration.

In a conventional camera calibration method, a calibration object with a known size needs to be used, and an extrinsic parameter of a camera is obtained by using a specific algorithm by establishing a correspondence between a point with known coordinates on the calibration object and a projection point of the point in an image. For example, a manner in which operation and maintenance personnel calibrate a camera on a pole tower is usually to select the pole tower or a specific building within a photographing range of the camera as a calibration object, to establish a correspondence between a specific point on the calibration object and a projection point of the point in an image.

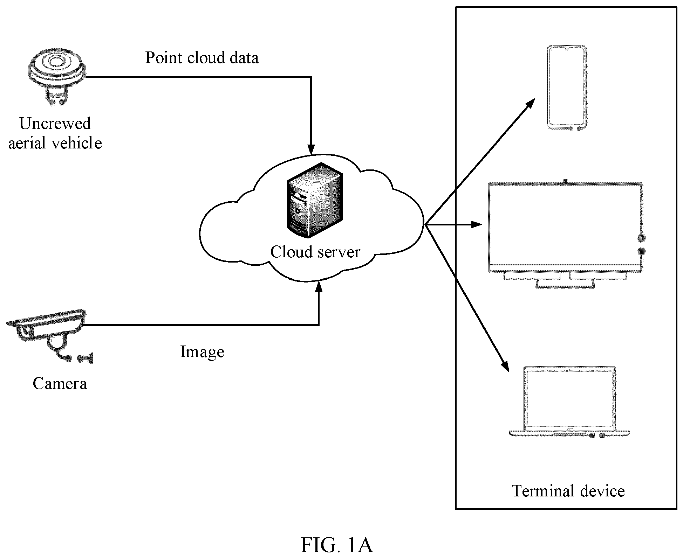

FIG. 1A is a diagram of an application scenario according to an embodiment of this application. As shown in FIG. 1A, an uncrewed aerial vehicle on which a lidar is carried flies to a space domain near an electric power transmission, and scans the electric power transmission and an environment around the electric power transmission, to collect point cloud data related to the electric power transmission. Then, the uncrewed aerial vehicle may transmit the collected point cloud data to a cloud server. In addition, a camera disposed on a pole tower of the electric power transmission captures an image of the electric power transmission and the environment around the electric power transmission, and transmits the captured image to the cloud server.

After obtaining the point cloud data and the image related to the electric power transmission, the cloud server performs a method provided in this embodiment of this application, to calibrate the camera that captures the image, and obtain an extrinsic parameter of the camera. Based on the extrinsic parameter of the camera, the cloud server calculates a distance between a potential risk target and the electric power transmission shown in the image, to determine whether the potential risk target causes harm to the electric power transmission. Then, the cloud server sends distance calculation to a terminal device, for example, a large display in an operation and maintenance hall, a notebook computer of operation and maintenance personnel, or a smartphone, so that the operation and maintenance personnel monitor a running status of the electric power transmission in real time.

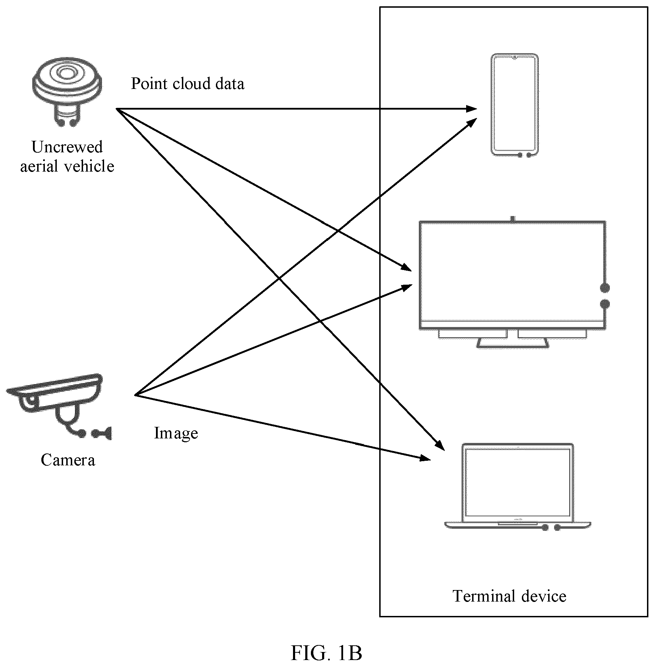

FIG. 1B is a diagram of another application scenario according to an embodiment of this application. As shown in FIG. 1B, an entity for performing a method provided in this embodiment of this application changes from a cloud server to a terminal device, for example, a large display of an operation and maintenance hall, a notebook computer of operation and maintenance personnel, or a smartphone. Specifically, after collecting point cloud data, an uncrewed aerial vehicle transmits the point cloud data to the terminal device related to the operation and maintenance personnel. Similarly, after capturing an image, a camera on a pole tower also transmits the image to the terminal device related to the operation and maintenance personnel. In this way, after receiving the point cloud data and the image related to an electric power transmission, the terminal device related to the operation and maintenance personnel performs the method provided in this embodiment of this application, to calibrate the camera that captures the image, and obtain an extrinsic parameter of the camera. Based on the extrinsic parameter of the camera, the terminal device calculates a distance between a potential risk target and the electric power transmission shown in the image, to determine whether the potential risk target may cause harm to the electric power transmission, and sends alarm information in time when the potential risk target may cause harm to the electric power transmission, to prompt the operation and maintenance personnel to perform processing.

The foregoing describes scenarios to which the method provided in embodiments of this application is applied. The following describes a device to which the method provided in embodiments of this application is applied.

The calibration method based on point cloud data and an image provided in embodiments of this application may be applied to an electronic device. For example, the electronic device may be, for example, a server, a wireless electronic device in a smart grid (smart grid), a smartphone (mobile phone), a personal computer (personal computer, PC), a notebook computer, a tablet computer, a smart large screen, a smart television, a mobile internet device (mobile internet device, MID), a wearable device, a virtual reality (virtual reality, VR) device, an augmented reality (augmented reality, AR) device, a wireless electronic device in industrial control (industrial control), a wireless electronic device in self driving (self driving), a wireless electronic device in remote surgery (remote medical surgery), a wireless electronic device in transportation safety (transportation safety), or a wireless electronic device in a smart city (smart city). For ease of description, the following describes the method provided in embodiments of this application by using an example in which the method provided in embodiments of this application is applied to a server.

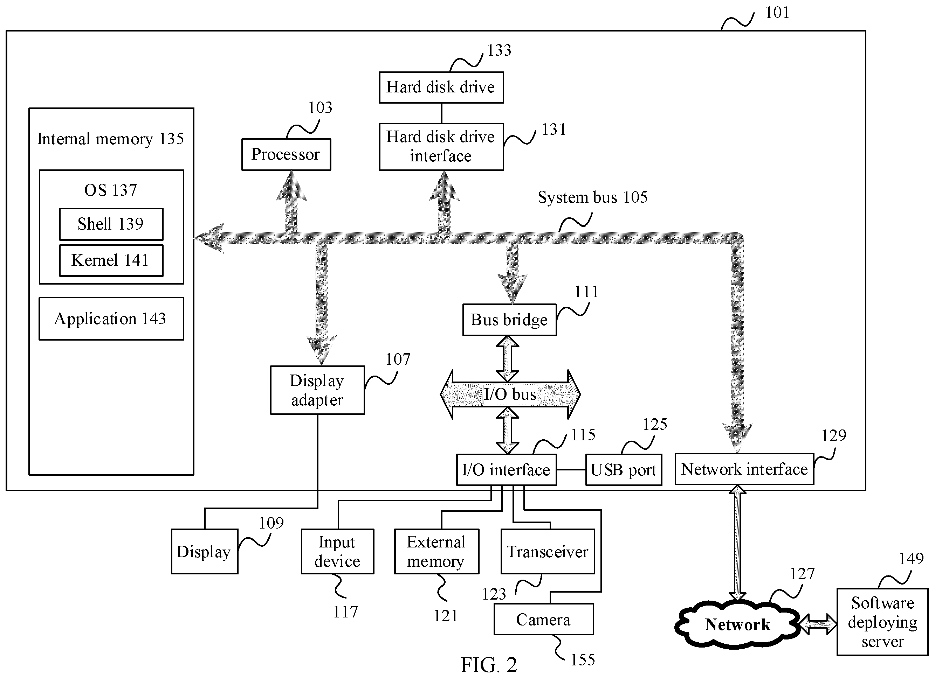

FIG. 2 is a diagram of a structure of an electronic device 101 according to an embodiment of this application. As shown in FIG. 2, the electronic device 101 includes a processor 103, and the processor 103 is coupled to a system bus 105. The processor 103 may be one or more processors, and each processor may include one or more processor cores. A display adapter (video adapter) 107 is further included, and the display adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 101 may communicate with a software deploying server 149 through a network interface 129. For example, the network interface 129 is a hardware network interface, for example, a network interface card. A network 127 may be an external network, for example, the internet, or an internal network, for example, the Ethernet or a virtual private network (virtual private network, VPN). Optionally, the network 127 may alternatively be a wireless network, for example, a Wi-Fi network, a cellular network, or the like.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application 143, and a schedule of the electronic device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes those parts of the operating system that are used for managing memories, files, peripherals, and system resources. The kernel 141 directly interacts with hardware, the kernel of the operating system usually runs a process, provides inter-process communication, and provides functions such as CPU time slice management, interrupt, memory management, and I/O management.

For example, when the electronic device 101 is a smartphone, the application 143 includes a program related to instant messaging. In an embodiment, when the application 143 needs to be executed, the electronic device 101 may download the application 143 from the software deploying server 149.

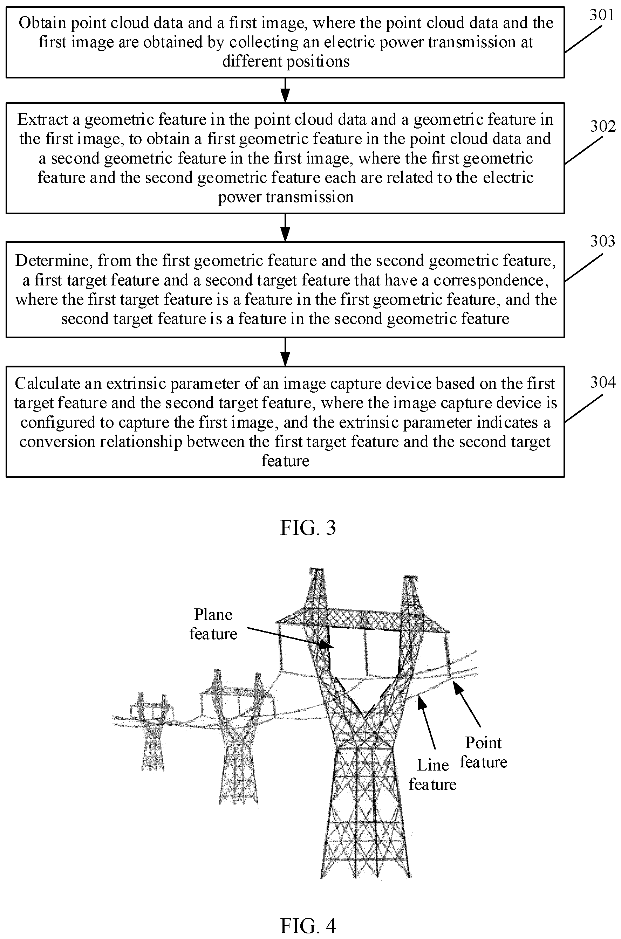

FIG. 3 is a schematic flowchart of a calibration method based on point cloud data and an image according to an embodiment of this application. For ease of description, the following describes the method provided in embodiments of this application by using an example in which the method provided in embodiments of this application is applied to a server. As shown in FIG. 3, the method includes the following step 301 to step 304.

Step 301: Obtain point cloud data and a first image, where the point cloud data and the first image are obtained by collecting an electric power transmission at different positions.

Specifically, the point cloud data may be, for example, obtained by scanning the electric power transmission by using a laser scanning device, for example, a lidar. In addition, in a process of scanning the electric power transmission by using the lidar, a scene near the electric power transmission is usually scanned together, so that the point cloud data can reflect shapes of the electric power transmission and the scene near the electric power transmission.

The first image may be obtained by photographing the electric power transmission by an image capture device (for example, a camera) deployed on a pole tower of the electric power transmission. Therefore, the first image includes the electric power transmission. In addition, in a process in which the image capture device photographs the electric power transmission, the scene near the electric power transmission is usually photographed in the image, so that the first image may also include the electric power transmission and the scene near the electric power transmission.

In conclusion, both the point cloud data and the first image in step 301 are obtained by collecting the same electric power transmission. Therefore, both the point cloud data and the first image can reflect a shape feature of the same electric power transmission and a shape feature of the scene near the electric power transmission.

Step 302: Extract a geometric feature in the point cloud data and a geometric feature in the first image, to obtain a first geometric feature in the point cloud data and a second geometric feature in the first image, where the first geometric feature and the second geometric feature each are related to the electric power transmission.

In this embodiment, the geometric feature is a feature of a geometric shape, for example, a feature of a geometric shape, for example, a line feature, a point feature, and a plane feature. Because the shape of the electric power transmission is unique to some extent, geometric features related to the electric power transmission can be effectively extracted by extracting the geometric features from the point cloud data and the first image.

Specifically, the geometric feature in the point cloud data and the geometric feature in the first image include one or more of the following features: a depth-discontinuous line feature and a plane feature that is related to the pole tower of the electric power transmission. The depth-discontinuous line feature indicates a transmission line, and the plane feature indicates a geometric surface of the pole tower.

The first geometric feature in the point cloud data and the second geometric feature in the first image can be obtained by extracting the geometric features in the point cloud data and in the first image. Because coordinates corresponding to each point in the point cloud data are three-dimensional coordinates, the first geometric feature in the point cloud data is also a three-dimensional geometric feature, that is, a geometric feature represented in a three-dimensional form. Coordinates corresponding to each pixel in the first image are two-dimensional coordinates. Therefore, the second geometric feature in the first image is a two-dimensional geometric feature, that is, a geometric feature represented in a two-dimensional form.

Optionally, the first geometric feature in the point cloud data and the second geometric feature in the first image each include one or more of the following features: the line feature, the point feature, and the plane feature.

For example, FIG. 4 is a diagram of an image related to an electric power transmission according to an embodiment of this application. As shown in FIG. 4, for long-distance transmission conducting wires in the electric power transmission, line features related to the transmission conducting wires can be extracted from point cloud data and a first image; for intersection points between the transmission conducting wires and pole towers in the electric power transmission, point features related to the transmission conducting wires and the pole towers can be extracted from the point cloud data and the first image; and for polygons (for example, pentagons in FIG. 4) of specific shapes in the pole towers, the plane features related to the pole towers can be extracted from the point cloud data and the first image.

It should be noted that the first geometric feature and the second geometric feature each are related to the electric power transmission may mean that the first geometric feature and the second geometric feature are related to the shape of the electric power transmission, that is, the first geometric feature and the second geometric feature are extracted based on the shape of the electric power transmission. That the first geometric feature and the second geometric feature each are related to the electric power transmission may also mean that the first geometric feature and the second geometric feature are related to the shape of the scene near the electric power transmission, that is, the first geometric feature and the second geometric feature are extracted based on the shape of the scene near the electric power transmission. For example, when the electric power transmission is installed above a fastened building, the fastened building near the electric power transmission may also be collected from the point cloud data and the first image. In this case, the first geometric feature and the second geometric feature may be obtained by extracting a shape feature of the fastened building near the electric power transmission.

In conclusion, based on the shape of the electric power transmission and/or the shape of the scene near the electric power transmission, the geometric features related to the electric power transmission can be extracted from the point cloud data and the first image.

Step 303: Determine, from the first geometric feature and the second geometric feature, a first target feature and a second target feature that have a correspondence, where the first target feature is a feature in the first geometric feature, and the second target feature is a feature in the second geometric feature.

Because the first geometric feature and the second geometric feature are respectively extracted from the point cloud data and the first image for a same object (that is, the electric power transmission and/or the scene near the electric power transmission), the first geometric feature and the second geometric feature have geometric feature s corresponding to a specific shape on the same object. Specifically, for the first target feature in the first geometric feature and the second target feature in the second geometric feature, both the first target feature and the second target feature correspond to a specific shape on the same object. For example, both the first target feature and the second target feature are line features, and correspond to the same transmission conducting wire on the electric power transmission. For another example, both the first target feature and the second target feature are point features, and correspond to a same contact point between the transmission conducting wire and the pole tower. For another example, both the first target feature and the second target feature are plane features, and correspond to a same geometric surface on the pole tower.

Optionally, the first target feature and the second target feature may each include only one feature, for example, a point feature, a line feature, or a plane feature. The first target feature and the second target feature may alternatively include a plurality of features. For example, the first target feature includes a plurality of point features, and the second target feature also includes a plurality of point features. For another example, the first target feature includes a point feature, a line feature, and a plane feature, and the second target feature also includes a point feature, a line feature, and a plane feature.

Step 304: Calculate an extrinsic parameter of the image capture device based on the first target feature and the second target feature, where the image capture device is configured to capture the first image, and the extrinsic parameter indicates a conversion relationship between the first target feature and the second target feature.

In this embodiment, the first target feature is a three-dimensional feature in a world coordinate system, and the second target feature is a two-dimensional feature in a camera coordinate system. Because there is a correspondence between the first target feature and the second target feature, the first target feature can be converted into the second target feature based on the extrinsic parameter of the image capture device. Based on this, the extrinsic parameter of the image capture device can be derived by using the first target feature and the second target feature. The first target feature can be converted into the second target feature by using the extrinsic parameter. In other words, the extrinsic parameter indicates the conversion relationship between the first target feature and the second target feature. The image capture device is, for example, a camera disposed on the pole tower, and is configured to capture an image of an electric power transmission.

For example, the first target feature and the second target feature each are a line feature. A line feature obtained after the first target feature is converted by using the extrinsic parameter should overlap the second target feature. In other words, the first target feature can be converted into the second target feature based on the extrinsic parameter. In this case, the relationship that needs to be met between the first target feature and the second target feature may be represented by using Formula 1.

$$0 = n_i^T \left( f\left( \pi \left( {}_L^C T(P_i^L + w_i^L) \right) \right) - (q_i + w_i^L) \right) \qquad \text{Formula 1}$$

$\pi(\cdot)$ is a camera model, f$(\cdot)$ is camera distortion effect, $w_i^L$ is noise, $P_i^L$ is a point of the first target feature in the point cloud data, $T_L^c$ is the extrinsic parameter, $q_i$ is a point of the second target feature in the first image, and $n_i^T$ is a normal vector of the second target feature in the first image.

Based on the relationship shown in Formula 1, the extrinsic parameter $T_L^c$ can be obtained through calculation by using a maximum likelihood estimation method, that is, the conversion relationship between the first target feature and the second target feature is obtained.

In this embodiment, geometric features (such as features of the transmission line, an intersection point between the transmission line and the pole tower, and a surface shape of the pole tower) related to the electric power transmission is extracted from the point cloud data and an image through the shape feature of the electric power transmission, and a geometric feature conversion relationship between the point cloud data and the image is obtained through calculation based on a correspondence between a geometric feature in the point cloud data and a geometric feature in the image, to obtain the extrinsic parameter of the image capture device. The shape of the electric power transmission is unique and identifiable to some extent, for example, a long-distance transmission conducting wire in the electric power transmission, an intersection point between the transmission conducting wire and a pole tower, or a polygon of a specific shape in the pole tower. Therefore, a correspondence between a geometric feature in three-dimensional point cloud data and a geometric feature in a two-dimensional image can be quickly and effectively determined by separately extracting geometric features related to the electric power transmission from the point cloud data and the image. In this way, a conversion relationship between the three-dimensional world coordinate system and the two-dimensional coordinate system of the image capture device is determined based on the correspondence between geometric features, to calibrate the image capture device.

In conclusion, in this solution, the point cloud data and the image that are related to the electric power transmission are obtained, so that the image capture device can be automatically calibrated without manual participation, thereby effectively improving calibration efficiency of the image capture device and reducing consumption of labor and material resources.

The foregoing describes the method for calibrating the image capture device based on the point cloud data and the image in embodiments of this application. For ease of understanding, the following describes in detail a process of extracting geometric features in the point cloud data and the image, and determining, from the extracted geometric feature, target features having a correspondence.

Specifically, the following describes in detail, from perspectives of the line feature, the point feature, and the plane feature, how to extract the geometric features in the point cloud data and the image, and how to determine, from the extracted geometric feature, the target features having the correspondence.

(1) Line feature

In this embodiment, when the line feature in the point cloud data is extracted, because the transmission conducting wires in the electric power transmission are continuous and continuously extend in the three-dimensional space, depths of points representing the transmission conducting wires in the point cloud data always change. The line feature in the point cloud data may be extracted by screening points whose depths have a specific change rule in the point cloud data.

Specifically, for each point in the point cloud data, a difference between a depth value of the point and a depth value of a neighboring point (that is, a depth change between the two points) is calculated. If the difference between the depth value of the point and the depth value of the neighboring point is greater than a threshold, it may be considered that the point and the neighboring point are located on a depth-discontinuous line feature. If the difference between the depth value of the point and the depth value of the neighbor point is not greater than a threshold, it may be considered that the point and the neighbor point are located on a depth-continuous line feature. By calculating differences between depth values of points and neighboring points in the point cloud data, a depth-discontinuous line feature including a plurality of points may be obtained. The depth-discontinuous line feature is a line feature that needs to be extracted in this embodiment.

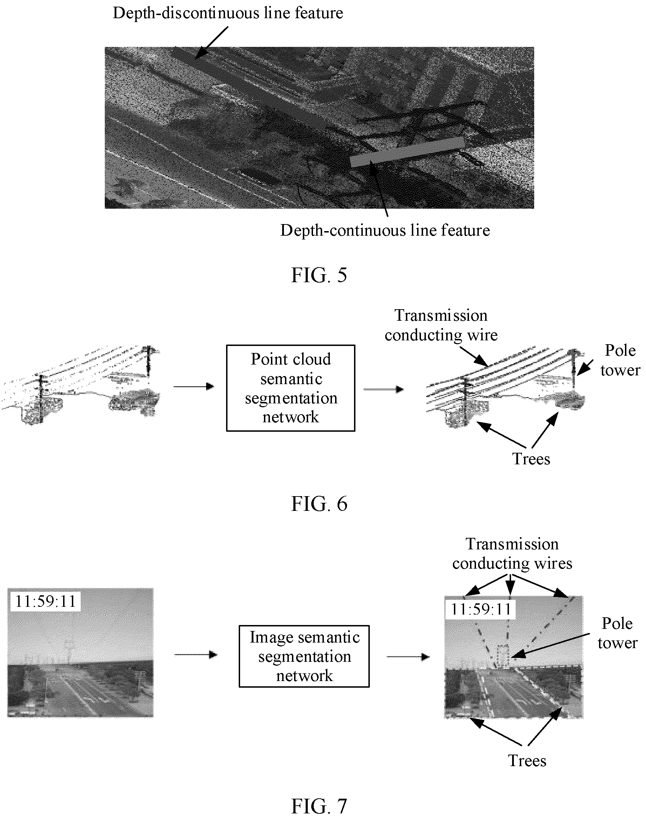

For example, FIG. 5 is a diagram of extracting a line feature from point cloud data according to an embodiment of this application. As shown in FIG. 5, in the point cloud data, depth-discontinuous line features may include, for example, line features such as a power transmission conducting wire and a building edge, and the line features are all formed by points whose depth values continuously change, and therefore are referred to as the depth-discontinuous line features. Depth-continuous line features may include, for example, line features such as a beam of a pole tower and an intersection line of adjacent walls, and the line features are formed by points with a small difference in depth values, and therefore are referred to as the depth-continuous line features.

In conclusion, in this embodiment, a line feature whose depth values of points continuously change is extracted from the point cloud data, to obtain a required line feature.

For example, for a first geometric feature extracted from the point cloud data, the first geometric feature includes a first line feature, and a difference between depth values of any two adjacent points in the first line feature is greater than a first threshold.

In this solution, the depth-discontinuous line feature is extracted from the point cloud data as a geometric feature, so that the line feature that indicates the transmission conducting wire and that is in the point cloud data can be effectively extracted based on the shape feature of the transmission conducting wire. This facilitates subsequent geometric feature matching.

Similarly, when the line feature in an image is extracted, the line feature in the image may also be extracted by detecting the depth-discontinuous line feature in the image. For example, in this embodiment, an edge detection algorithm may be used to extract the depth-discontinuous line feature in the image, to obtain a required line feature.

In other words, for the extracted first geometric feature and an extracted second geometric feature, the first geometric feature and the second geometric feature each include a depth-discontinuous line feature.

In this embodiment, after corresponding line features each is extracted from the point cloud data and the image, a line feature extracted from the point cloud data may be projected as a pixel of the image, to form a projection line feature. The projection line feature corresponding to the point cloud data is matched with the line feature in the image, to obtain line features that have a correspondence and that are in the point cloud data and the image.

For example, in a process of determining, from the first geometric feature and the second geometric feature, the first target feature and the second target feature that have the correspondence, a point in the first line feature is converted into a pixel in the image by using a preset extrinsic parameter, to obtain a second line feature, where the preset extrinsic parameter is an extrinsic parameter preset by an image capture device. The extrinsic parameter preset by the image capture device can indicate a conversion relationship from a world coordinate system to a camera coordinate system. Therefore, based on the preset extrinsic parameter, a three-dimensional point in the first line feature in the world coordinate system can be converted into a two-dimensional pixel in the image in the camera coordinate system, that is, a three-dimensional first line feature is converted into a two-dimensional second line feature.

Generally, when the image capture device is deployed, the image capture device is calibrated to obtain an extrinsic parameter of the image capture device at an initial deployment position. However, in a running phase of the image capture device, due to external environment impact, the image capture device may move or drift, and consequently the extrinsic parameter of the image capture device changes. Therefore, in this embodiment, the extrinsic parameter obtained through calibration when the image capture device is deployed may be used as the extrinsic parameter preset by the image capture device. In this embodiment, the extrinsic parameter obtained by the image capture device in a previous calibration process may also be used as the extrinsic parameter preset by the image capture device.

After the first line feature in the point cloud data is converted into the second line feature in the camera coordinate system, a third line feature most similar to the second line feature is determined in the second geometric feature of the first image, and the first line feature is determined as the first target feature and the third line feature is determined as the second target feature.

For example, it is assumed that a point that is in the first line feature of the point cloud data and that is projected to the camera coordinate system is $p_i$. For the point $p_i$, k nearest neighbor points are searched for in the second geometric feature of the first image, to obtain a set $Q_i = \{q_i^j; j = 1, ..., k\}$ including the k neighbor points.

Because the first line feature in the point cloud data includes M points, each point is projected to the camera coordinate system to form a point $p_i$, and neighboring points of each point $p_i$ form a set $Q_i$, to obtain a total of M point groups $Q_i$. It is assumed that $L_i$ is a second line feature projected from the first line feature to the camera coordinate system, and the second line feature $L_i$ may be determined by using two parameters: a point $m_i$ and a normal vector $n_i$, where $n_i$ is a feature vector corresponding to a minimum eigenvalue of $S_i$, and $m_i$, $S_i$ is obtained by using the following formula 2 and formula 3 respectively.

$$m_i = \frac{1}{M \times k} \sum_{j=1}^{M \times k} q_i^j \qquad\qquad \text{Formula 2}$$

$$S_i = \sum_{j=1}^{M \times k} \left(q_i^j - q_i\right)\left(q_i^j - q_i\right)^T \qquad\qquad \text{Formula 3}$$

Therefore, based on the foregoing projection manner, each line feature in the point cloud data is projected to the camera coordinate system, and a corresponding projection line feature determined by using the point $m_i$ and the normal vector $n_i$ may be formed.

In this solution, the three-dimensional line feature extracted from the point cloud data is converted into the two-dimensional line feature in the camera coordinate system, so that the two-dimensional line feature corresponding to the point cloud data can be compared with the line feature in the image, to determine line features that have a correspondence and that are in the point cloud data and the image. This ensures feasibility of the solution.

(2) Point feature

To ensure that the point features extracted from the point cloud data and the first image have a same feature, in this embodiment, after the point in the point cloud data is converted into the pixel in the image, point features are extracted from a converted image and the first image in a same point feature extraction manner.

For example, in a process of extracting a geometric feature from the point cloud data, the point in the point cloud data is first converted into the pixel in the image by using the preset extrinsic parameter, to obtain the second image, where the preset extrinsic parameter is an extrinsic parameter preset by the image capture device. Then, a point of interest in the second image is detected based on an image point of interest detection algorithm, and a point that is in the point cloud data and that corresponds to the point of interest is determined, to obtain a first geometric feature. Because pixels in the second image are all obtained by converting points in the point cloud data, after the point of interest in the second image is determined, the point that is in the point cloud data and that corresponds to the point of interest may be determined. The image point of interest detection algorithm includes, for example, a scale-invariant feature transform (Scale-invariant feature transform, SIFT) algorithm.

Similarly, in a process of extracting the geometric feature in the first image, a point of interest in the first image is detected by using the image point of interest detection algorithm, to obtain a point feature in the first image. Algorithms used to detect points of interest in the first image and the second image may be same algorithms, so that points of interest with same features can be detected.

After the points of interest in the first image and the second image are extracted, the points of interest in the first image and the points of interest in the second image are matched, to obtain one or more pairs of points of interest with a highest similarity. In addition, in the one or more pairs of points of interest with the highest similarity, the point of interest in the second image corresponds to a point in the point cloud data. Therefore, based on the one or more pairs of points of interest, point features that have a correspondence and that are in the point cloud data and the first image can be determined.

In conclusion, in this embodiment, the point in the point cloud data is first converted into the pixel in the second image, then point features are extracted on the first image and the second image in a same manner, and the point features extracted from the first image and the second image are matched. Finally, point features that have a correspondence and that are in the point cloud data and the first image is determined based on the point in the point cloud data and the point in the second image.

(3) Plane feature

In a process of determining plane features that have a correspondence and that are in the point cloud data and the first image, the plane features in the point cloud data and the first image may be first extracted, then the plane feature extracted from the point cloud data is converted into a projection plane feature in the camera coordinate system, and finally the plane features that have a correspondence and that are in the point cloud data and the first image is determined by matching the projection plane feature and the plane feature in the first image.

For example, a plane feature in the point cloud data is first extracted by using a plane detection algorithm (for example, an area growth algorithm), to obtain a first geometric feature, where the first geometric feature includes at least one three-dimensional plane feature. In addition, the plane detection algorithm continues to extract a plane feature in the first image, to obtain a second geometric feature, where the second geometric feature includes at least one two-dimensional plane feature.

After the first geometric feature and the second geometric feature are extracted, the at least one three-dimensional plane feature may be converted into at least one two-dimensional projection plane feature by using the preset extrinsic parameter. Because each three-dimensional plane feature in the point cloud data includes a plurality of points, after the plurality of points forming the three-dimensional plane feature are converted into two-dimensional pixels by using the preset extrinsic parameter, the at least one three-dimensional plane feature may be converted into the at least one two-dimensional projection plane feature.

Then, the at least one two-dimensional projection plane feature is matched with the at least one two-dimensional plane feature, to determine a first target feature and a second target feature that match with each other, where the first target feature includes a feature in the at least one two-dimensional projection plane feature, and the second target feature includes a feature in the at least one two-dimensional plane feature.

The foregoing describes a detailed process of extracting geometric features such as a line feature, a point feature, and a plane feature from the point cloud data and the first image, and determining geometric features that have a correspondence. It can be learned from the foregoing description that more content included in the point cloud data and the first image indicates that more geometric features may be extracted from the point cloud data and the first image, and therefore, a process of determining geometric features that have a correspondence are easily affected.

Based on this, in this embodiment, before the geometric feature in the point cloud data and the geometric feature in the first image are extracted, content that is in the point cloud data and the first image and that easily affects a process of determining geometric features that have a correspondence may be first identified, and this part of content is filtered out, to ensure that the geometric features that have a correspondence and that are in the point cloud data and the first image can be accurately extracted and determined subsequently.

Specifically, before the geometric features in the point cloud data and in the first image are extracted, semantic segmentation is first performed on the point cloud data and the first image, to obtain a first semantic segmentation result corresponding to the point cloud data and a second semantic segmentation result corresponding to the first image. The first semantic segmentation result indicates a category of each point in the point cloud data, and the second semantic segmentation result indicates a category of each pixel in the first image.

For example, FIG. 6 is a diagram of a process of performing semantic segmentation on point cloud data according to an embodiment of this application. As shown in FIG. 6, for point cloud data including a large quantity of three-dimensional points, semantic segmentation may be performed on the point cloud data through a point cloud semantic segmentation network, to obtain a first semantic segmentation result. The first semantic segmentation result may separately indicate, by using different color labels, categories of all points in the point cloud data, for example, categories such as a transmission conducting wire, a pole tower, and a tree. The point cloud semantic segmentation network may be a neural network that is trained in advance by using a large amount of training data, for example, a deep learning neural network. The point cloud semantic segmentation network is not limited herein.

FIG. 7 is a diagram of a process of performing semantic segmentation on a first image according to an embodiment of this application. For the first image, semantic segmentation may be performed on the first image through an image semantic segmentation network, to obtain a second semantic segmentation result. Similarly, the second semantic segmentation result may indicate, by using different color labels, categories of all points in the first image, for example, categories such as a transmission conducting wire, a pole tower, a tree, a road, and a pedestrian.

Then, data of a preset category in the point cloud data is filtered out based on the first semantic segmentation result, to obtain updated point cloud data. A part of the preset category in the first image is removed based on the second semantic segmentation result, to obtain an updated first image. Because the first semantic segmentation result indicates a category of each point in the point cloud data, and the second semantic segmentation result indicates a category of each pixel in the first image, in this embodiment, the point or the pixel of the preset category in the point cloud data and the first image may be filtered out based on the first semantic segmentation result and the second semantic segmentation result, to obtain the updated point cloud data and the updated first image. For example, the preset category may be a category that easily changes with time, for example, a pedestrian, a car, or a tree. By filtering out content of the preset category in the point cloud data and the first image, an unstable feature can be effectively filtered out, to ensure that geometric features that have a correspondence and that are in the point cloud data and the first image can be accurately extracted and determined subsequently.

Finally, geometric features are extracted from the updated point cloud data and the updated first image.

In this solution, before the geometric feature in the point cloud data and the geometric feature in the first image are extracted, content that is in the point cloud data and the first image and that easily affects a process of determining geometric features that have a correspondence may be first identified through a semantic segmentation network, and this part of content is filtered out, to ensure that the geometric features that have a correspondence and that are in the point cloud data and the first image can be accurately extracted and determined subsequently.

The foregoing describes in detail a process of calibrating the image capture device based on the point cloud data and the first image. The following describes a process of calculating a distance between a potential risk target and an electric power transmission shown in the first image after the image capture device is calibrated.

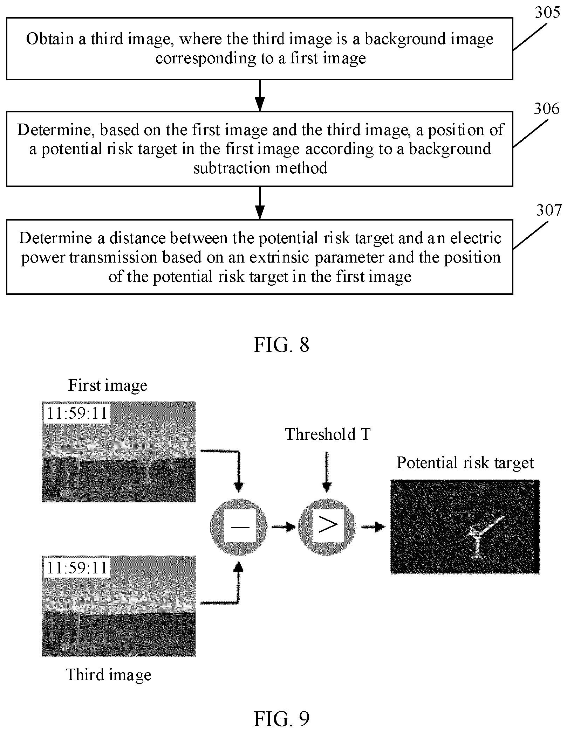

FIG. 8 is a schematic flowchart of a calibration method based on point cloud data and an image according to an embodiment of this application. As shown in FIG. 8, in the embodiment shown in FIG. 3, the calibration method based on point cloud data and an image may further include the following step 305 to step 307.

Step 305: Obtain a third image, where the third image is a background image corresponding to a first image.

In this embodiment, the first image includes a potential risk target, that is, an object that may cause harm to the electric power transmission, for example, a large construction machine, a crane, a tower crane, a firefighting ladder, or a cement tanker. The third image is the background image corresponding to the first image, and is used to cooperate with the first image to determine the potential risk target in the first image. In addition, a size of the third image is the same as that of the first image. For example, the third image and the first image each are an image with a resolution of 1980*1080.

For example, the first image and the third image each may be an image captured by a same image capture device, the first image includes the electric power transmission and the potential risk target, and the third image includes the electric power transmission and does not include the potential risk target. That is, the first image and the third image may be images obtained by a same image capture device by photographing a same area at different moments.

For another example, when an image that includes the electric power transmission but does not include the potential risk target cannot be obtained, the first image may be processed to obtain the third image. Specifically, an average value of all pixel values in the first image is obtained through calculation based on the pixel values of all pixels in the first image, and the average value is used as a value of each pixel in the third image, to obtain the third image. That is, values of all pixels in the third image are a second threshold, and the second threshold is the average value of all the pixel values in the first image.

Step 306: Determine, based on the first image and the third image, a position of the potential risk target in the first image according to a background subtraction method.

Specifically, that the position of the potential risk target in the first image according to the background subtraction method means performing subtraction on values of pixels at a same position in the first image and the third image, to obtain a pixel difference at each position; and if a pixel difference at a position is greater than a set threshold, determining a pixel at the position as a pixel that is of the potential risk target, to determine the potential risk target including a plurality of pixels.

FIG. 9 is a diagram of determining a position of a potential risk target according to an embodiment of this application. As shown in FIG. 9, the first image includes the electric power transmission and the potential risk target, and the third image includes only the electric power transmission and does not include the potential risk target. Subtraction on values of pixels at a same position in the first image and the third image are performed, to obtain a pixel difference at each position. Based on a set threshold T, if a pixel difference at a position is greater than the threshold T, a pixel value at the position is set to 1 (that is, a pixel value set to white); or if a pixel difference at a position is not greater than the threshold T, a pixel value at the position is set to 0 (that is, a pixel value set to black). In this way, the position of the potential risk target in the first image may be determined by comparing pixel differences at all positions in the first image and the third image, that is, pixels whose pixel values are 1 are potential risk targets.

In this solution, the background image corresponding to the first image is obtained, and the potential risk target in the first image is determined according to the background subtraction method. Compared with a conventional artificial intelligence recognition method, in this solution, a position of the potential risk target can be simply and effectively determined, and fewer computing resources are required.

Step 307: Determine a distance between the potential risk target and the electric power transmission based on an extrinsic parameter and the position of the potential risk target in the first image.

After the position of the potential risk target in the first image is determined, a point in the potential risk target in the first image can be converted into a point in a world coordinate system based on the extrinsic parameter, so that coordinates of each part in the potential risk target in the world coordinate system are obtained, to determine a distance between the potential risk target and the electric power transmission.

For example, it is assumed that the potential risk target is perpendicularly disposed on the ground, and the potential risk target is a vertical object (for example, a large truck or a cement tanker). Based on the position of the potential risk target in the first image, coordinates of a contact point between the potential risk target and the ground in a camera coordinate system can be determined. Based on the extrinsic parameter, coordinates of the contact point in the camera coordinate system may be converted into three-dimensional coordinates $(x_0, y_0, z_0)$ in the world coordinate system. Then, an actual length of the potential risk target may be obtained through calculation according to the camera imaging principle, and coordinates of the top of the potential risk target in the world coordinate system are calculated based on the actual length of the potential risk target and the coordinates of the contact points in the potential risk target in the world coordinate system, to determine a distance between the top of the potential risk target and the electric power transmission.

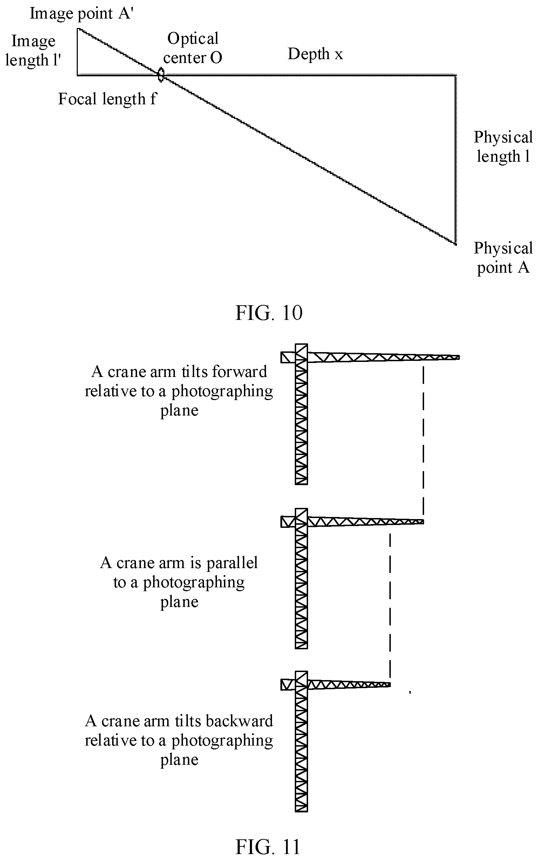

Specifically, FIG. 10 is a diagram of a camera imaging principle according to an embodiment of this application. As shown in FIG. 10, a physical point A in a physical world is projected as an image point A' in an image by using an optical center O of a camera. In addition, a distance between the physical point A and the ground is a physical length l, and the physical length l is projected as an image length l' in the image. A ratio of the image length l' to the physical length l is the same as a ratio of a focal length f of the camera to a depth x of the physical point A from the optical center 0, that is, $\frac{f}{x} = \frac{l'}{l}$.

Therefore, the imaging principle of the camera may be further extended as follows: For any line segment m on a visual plane and a projection line segment m' of the line segment m in the image, the following proportional relationship $\frac{f}{x} = \frac{m'}{m}$ is met.

It may be understood that, the foregoing describes how to calculate a distance between a potential risk target and an electric power transmission by using an example in which the potential risk target is a vertical object with a simple structure. However, in some scenarios, the potential risk target may be some objects with complex structures, such as, a crane or a tower crane with one part perpendicular to the ground and the other part tilted and suspended in the air. It is usually difficult to accurately calculate a distance between the potential risk target and the electric power transmission based on a position of the potential risk target in the first image and an extrinsic parameter.

Specifically, an example in which the potential risk target is the tower crane is used, the tower crane usually includes two parts: a support column perpendicularly disposed on the ground and a crane arm disposed on the top of the support column. The support column is usually vertical, the crane arm is suspended on the top of the support column, one end of the crane arm is connected to the support column, and the other end of the crane arm extends outwards. In a process of photographing a tower crane by using a camera, because the support column of the tower crane is perpendicularly disposed on the ground, the tower crane is usually parallel to a photographing plane of the camera, and an actual height of the tower crane can be calculated based on a tower crane height that is displayed in the image and the extrinsic parameter. However, because the crane arm disposed on the tower crane may rotate around the support column, the crane arm may be parallel to the photographing plane of the camera, or may be at a specific angle with the photographing plane, for example, the crane arm tilts forward or backward relative to the photographing plane. When the crane arm and the photographing plane are at a specific angle, there is a specific error between an actual length and a crane arm length that is obtained through calculation based on a crane arm length displayed in the image and the extrinsic parameter.

For example, FIG. 11 is a diagram of a crane arm at different positions according to this embodiment of this application. It can be learned from the camera imaging principle that when a photographed object in physical space is closer to a camera, a projection length of the photographed object in an image is also larger, that is, a length of the photographed object in the image is longer; and when a photographed object in physical space is farther from the camera, a projection length of the photographed object in the image is also smaller, that is, a length of the photographed object in the image is shorter. As shown in FIG. 11, when the crane arm is parallel to the photographing plane, an actual length of the crane arm in physical space can be obtained through calculation based on a length of the crane arm in the image and the extrinsic parameter. When the crane arm tilts forward relative to the photographing plane, a distance between the crane arm and the camera is shortened, and the length of the crane arm in the image is longer. Therefore, the actual length of the crane arm in the physical space cannot be obtained through calculation based on the length of the crane arm in the image and the extrinsic parameter, that is, the result obtained through calculation is larger. When the crane arm is tilted backward relative to the photographing plane, the distance between the crane arm and the camera becomes larger, and the length of the crane arm in the image becomes smaller. Therefore, the actual length of the crane arm in the physical space cannot be obtained through calculation based on the length of the crane arm in the image and the extrinsic parameter, that is, the result obtained through calculation is smaller.

Based on this, this embodiment provides a manner of calculating the distance between the potential risk target and the electric power transmission, to accurately calculate the distance between the potential risk target with the complex structure and the electric power transmission.

For example, for the potential risk target in the first image, the potential risk target includes a first part and a second part, one end of the first part is in perpendicular contact with the ground, the other end of the first part is connected to one end of the second part, and there is an included angle between the second part and a photographing plane of the first image, that is, the second part is not parallel to the photographing plane of the first image. For example, the potential risk target may be the tower crane, the crane, or the firefighting ladder, the first part may be the support column of the tower crane, and the second part may be the crane arm of the tower crane.

For the potential risk target including the first part and the second part, that the distance between the potential risk target and the electric power transmission is determined specifically includes: obtaining a preset length corresponding to the second part, where the preset length is determined by identifying a category of the potential risk target. For example, for various categories of potential risk targets (such as the tower crane, the crane, or the firefighting ladder), actual lengths or length ranges of the second parts of these potential risk targets may be input in advance, and an actual length or a length range is used as the preset length corresponding to the second part. For example, it is assumed that the potential risk target is the tower crane, and the preset length of the second part of the potential risk target may be, for example, 50 m; and it is assumed that the potential risk target is the crane, and the preset length of the second part of the potential risk target may be, for example, 40 m. A manner of identifying the category of the potential risk target in the first image may be: identifying the potential risk target by using an image classification network based on a position of the potential risk target in the first image.

Then, a position of a potential risk point in a world coordinate system is determined based on the extrinsic parameter, the preset length, and the length of the second part in the first image, where the potential risk point is located at the other end of the second part (namely, an end that is in the second part and that is not connected to the first part).

Finally, the distance between the potential risk point and the electric power transmission is determined based on the position of the potential risk point in the world coordinate system.

For ease of understanding, the following describes in detail how to determine the position of the potential risk point in the world coordinate system.

Specifically, when the position of the potential risk point in the world coordinate system is determined, because the second part of the potential risk target tilts forward and backward relative to the photographing plane, lengths of the potential risk target in the first image are different. Therefore, in this embodiment, a tilt direction that is of the second part of the potential risk target and that is relative to the photographing plane may be first determined, that is, whether the second part of the potential risk target tilts forward or backward relative to the photographing plane is determined.

The tilt direction that is of the second part of the potential risk target and that is relative to the photographing plane may be determined in a plurality of manners.

In a possible implementation, because a color of the entire second part of the potential risk target is usually unified, for example, an entire crane arm in the tower crane is yellow, the tilt direction that is of the second part of the potential risk target and that is relative to the photographing plane may be determined by changing a grayscale value of the second part of the potential risk target in the first image. For the second part of the potential risk target, from one end to the other end of the second part, if a grayscale value of a pixel corresponding to the second part in the first image is unchanged, it indicates that the second part is parallel to the photographing plane; if a grayscale value of a pixel corresponding to the second part in the first image gradually increases, it indicates that the second part tilts forward relative to the photographing plane; or if the grayscale values of the pixels corresponding to the second part in the first image gradually decrease, it indicates that the second part is tilted backward relative to the photographing plane.

In another possible implementation, the tilt direction of the second part of the potential risk target may be predicted through a pre-trained neural network, that is, whether the second part of the potential risk target tilts forward or backward relative to the photographing plane is predicted.

After the tilt direction that is of the second part of the potential risk target and that is relative to the photographing plane is determined, the position of the potential risk point in the potential risk target in the world coordinate system may be calculated.

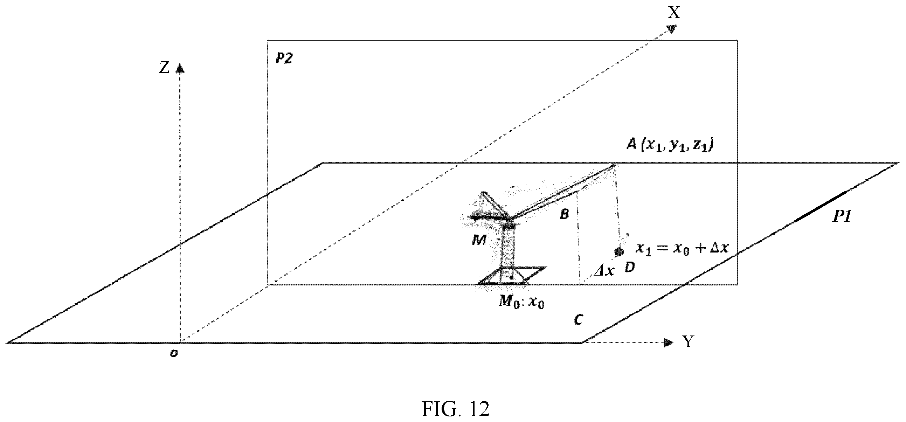

For example, FIG. 12 is a diagram of determining coordinates of a potential risk point in a potential risk target according to an embodiment of this application. As shown in FIG. 12, a world coordinate system may be established by using a depth direction of a camera as an X-axis, a direction horizontally perpendicular to the X-axis as a Y-axis, and a height direction as a Z-axis. A plane P1 is a ground plane, a plane P2 is a visual plane. The plane P2 is at a same depth as the potential risk target and is perpendicular to the Z-axis.

In FIG. 12, the potential risk target is a tower crane, and the potential risk target includes two parts: a support column and a crane arm. A bottom endpoint $M_0$ of the support column is in contact with the ground, and a top endpoint M of the support column is connected to one end of the crane arm. A position of an endpoint at the other end of the crane arm in the world coordinate system is a potential risk point A, and a projection point of the potential risk point A on the visual plane P2 is an endpoint B. In an image through photographing, the potential risk point A overlaps the endpoint B, and the overlapped point is referred to as a point B'. In FIG. 12, an extension segment (the crane arm) that is seen and that is projected by a line segment MB to the image is denoted as M'B', BC is a perpendicular line from B to the ground, and a projection of BC in the image is B'C'. In this case, B'C' = M'B' · sin α + M'M,', and $M_0'C' = M'B'\cos\alpha$ may be calculated, where α is an included angle between M'B' and a horizontal line. Therefore, in this solution, the coordinates of the potential risk point A in the world coordinate system need to be obtained through calculation to determine a position of the potential risk point in the potential risk target.

Specifically, it is assumed that the coordinates of the potential risk point A in the world coordinate system are $(x_1, y_1, z_1)$, and the following describes how to calculate a coordinate of the potential risk point A on each axis.

First, for a coordinate $y_1$ of the potential risk point A on the Y-axis, because the line segment AB is perpendicular to the visual plane, y values of the potential risk point A and the endpoint B on the Y-axis are equal, that is, $y_1 = y_0 + M_0C$.

$M_0C$ may be obtained according to $\frac{f}{x} = \frac{M_0'C'}{M_0C}$, $M_0'C'$ is a pixel length in the image, and is directly obtained by using the image. In addition, the three-dimensional coordinates $(x_0, y_0, z_0)$ of a contact point $M_0$ between the potential risk target and the ground in the world coordinate system may be determined based on the extrinsic parameter and $M_0$ at a position in the image. In addition, based on a same manner, three-dimensional coordinates of the top endpoint M of the support column in the potential risk target in the world coordinate system may be determined.

For a coordinate $x_1$ of the potential risk point A on the X-axis, because the potential risk point is the farthest end of the extension segment and is affected by a pose tilt, it can be learned from a formula $\frac{f}{x_1} = \frac{B'C'}{z_1}$ that $x_1$ is unknown in the formula, and a larger value $x_1$ indicates a larger value $z_1$, and if the value $x_1$ is underestimated, a height of the potential risk point A is underestimated. Therefore, the coordinates of the potential risk point A are considered based on an actual situation.

Specifically, when a second part (that is, a line segment MA) of the potential risk target is tilted backward, the coordinate of the potential risk point A on the X-axis needs to be determined based on a contact point $x_0$ between the potential risk target and the ground and a projection length $\Delta x$ of the potential risk point on the ground. $\Delta x$ is determined by a right triangle ABM, AB is $\Delta x$, AM is a preset length corresponding to the tower crane, and MB is determined by the pixel length in the figure, that is, $\frac{f}{x_0} = \frac{M'B'}{MB}$. Therefore, the coordinate of the potential risk point A on the X-axis is as follows: $x_1 = x_0 + \Delta x$; and a coordinate $z_1$ of potential risk point A on the Z-axis may be obtained through calculation according to the formula $\frac{f}{x_1} = \frac{B'C'}{z_1}$.

It should be noted that, when a preset length corresponding to the tower crane is in a length range, the length AM corresponding to the tower crane may be selected within the length range based on MB, that is, AM needs to be greater than MB.

When the second part (that is, the line segment MA) of the potential risk target tilts backward, the coordinate $x_1$ of the potential risk point A on the X-axis may be determined based on the contact point $x_0$ between the potential risk target and the ground and the projection length $\Delta x$ of the potential risk point on the ground, that is, $x_1 = x_0 - \Delta x$. The coordinate $z_1$ of

potential risk point A on the Z-axis may be obtained through calculation according to the following formula $\frac{f}{x_1} = \frac{B\prime C\prime}{z_1}$.

In conclusion, after a tilt direction that is of the second part of the potential risk target and that is relative to a photographing plane is determined, the position of the potential risk point in the potential risk target in the world coordinate system may be determined based on a preset length of the second part of the potential risk target and the extrinsic parameter.

In addition, when the tilt direction that is of the second part of the potential risk target and that is relative to the photographing plane cannot be determined, a position of the potential risk point in the potential risk target in the world coordinate system in various tilt directions (that is, tilt forward, tilt backward, and parallel to the photographing plane) of the second part of the potential risk target may be calculated, so that distances between the potential risk point and the electric power transmission in different cases are obtained through calculation.

It may be understood that the foregoing describes determining a distance between the current potential risk point in the potential risk target and the electric power transmission based on content displayed in the first image. However, because the second part of the potential risk target is usually movable, for example, the crane arm in the tower crane may move back and forth and rise, even if the second part of the potential risk target displayed at the position in the first image does not cause harm to the electric power transmission, the second part may also cause harm to the electric power transmission after the second part of the potential risk target moves. Based on this, in this embodiment of this application, a range that can be actually reached by the second part of the potential risk target may be determined, to determine whether the second part of the potential risk target causes harm to the electric power transmission.

For example, the potential risk range is determined based on a position of one end of the second part of the potential risk target in the world coordinate system and a preset length corresponding to the second part. The potential risk range is a range that can be reached by the potential risk point. In other words, when the end of the second part is fastened and the other end of the second part can move around the fastened point, a range to which the potential risk point on the other end of the second part can move is the potential risk range. Specifically, the position of the end of the second part in the world coordinate system is determined based on the extrinsic parameter and a position of the end of the second part in the first image.

After the potential risk range is determined, a distance between a point in the potential risk range and the electric power transmission may be calculated, and first alarm information is generated when the distance between the point in the potential risk range and the electric power transmission is less than a first safe distance. The first safe distance may be determined according to a running standard of the electric power transmission, and is specifically related to a power transmission voltage of the electric power transmission. The first safe distance may be specified by the operation and maintenance personnel in advance. A value of the first safe distance is not specifically limited herein.

In this solution, the potential risk range that can be reached by the potential risk point in the potential risk target is determined based on a length of the second part of the potential risk target, to determine whether a distance between a point in the potential risk range and the electric power transmission is less than a safe distance, and to determine whether the potential risk target causes harm to the electric power transmission during operating. This eliminates a potential risk in time and avoids harm caused by the potential risk target to the electric power transmission during operating.

In some cases, when a power transmission voltage level of the electric power transmission is high, the running standard of the electric power transmission also specifies an overhead power line protection area. The overhead power line protection area means a safe area that needs to be set to ensure safe running of a constructed overhead power line and normal power supply for the national economy and people's livelihood. Generally speaking, the overhead power line protection area is an area of two parallel lines formed by extending borderlines of transmission conducting wires outwards. In general areas, a borderline extension distance of each voltage conducting wire is as follows: A voltage is 1-10 kV, and the borderline extension distance is 5 m; a voltage is 35-110 kV, and the borderline extension distance is 10 m; a voltage is 154-330 kV, and the borderline extension distance is 15 m; or a voltage is 500 kV, and the borderline extension distance is 20 m.

Based on this, in this embodiment, a distance between the overhead power line protection area and the position where the potential risk target is in contact with the ground may be further determined, to ensure that the distance between the potential risk target and the overhead power line protection area is greater than or equal to a safe distance.

For example, after an extrinsic parameter of an image capture device is determined, the position of the contact point in the world coordinate system is determined based on the extrinsic parameter and the position of the contact point in the first image, where the contact point is a point at which the potential risk target is in contact with the ground. Then, the distance between the contact point and the overhead power line protection area is calculated based on the position of the contact point in the world coordinate system, and second alarm information is generated when the distance between the contact point and the overhead power line protection area is less than a second safe distance.

The second safe distance may be a preset distance, for example, a value such as 1 m, 2 m, or 5 m. This is not specifically limited herein. When the distance between the contact point and the overhead power line protection area is less than the second safe distance, it is considered that the potential risk target may move into the overhead power line protection area. Therefore, the second alarm information may be generated to remind the operation and maintenance personnel to pay close attention to the potential risk target. The second alarm information may indicate the distance between the contact point and the overhead power line protection area, so that the operation and maintenance personnel can learn the current position of the potential risk target in time.

Optionally, after the distance between the potential risk point and the electric power transmission is determined, the distance between the potential risk point and the electric power transmission may be marked in the first image, so that the operation and maintenance personnel can quickly determine the distance between the potential risk point and the electric power transmission. Similarly, that the distance between the contact point between the potential risk target and the ground and the power line protection area is determined may also be that the distance between the contact point and the power line protection area is marked in the first image.

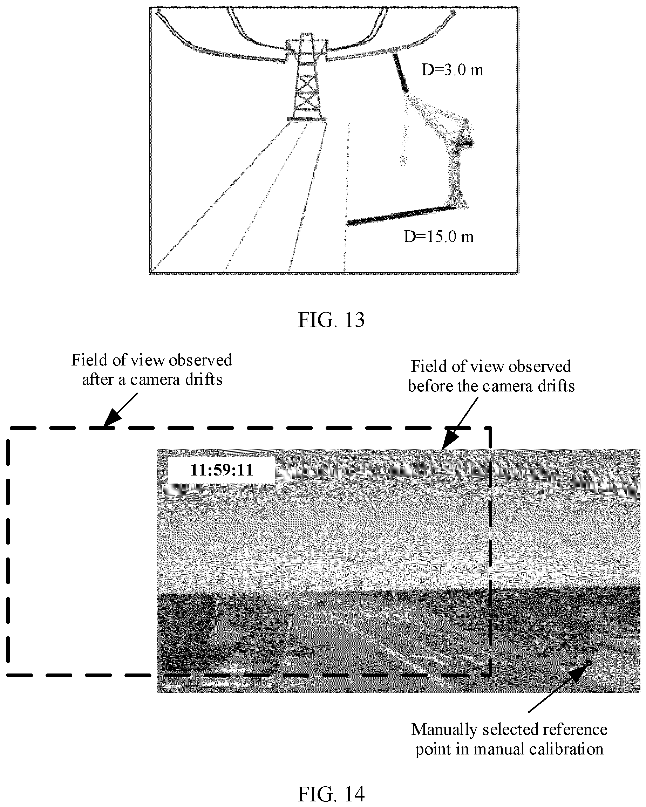

For example, FIG. 13 is a diagram of displaying a distance between a potential risk target and an electric power transmission according to an embodiment of this application. As shown in FIG. 13, in an image that includes both the electric power transmission and the potential risk target, the image shows that a distance between a potential risk point on the top of the potential risk target and the electric power transmission is 3 m, and the image further shows that a distance between an overhead power line protection area and a contact point between the bottom of the potential risk target and the ground is 15 m. Therefore, based on the image shown in FIG. 13, operation and maintenance personnel can quickly determine a distance between a specific part of the potential risk target and the electric power transmission, to determine whether the potential risk target causes harm to the electric power transmission, to handle the potential risk target as early as possible.

In conclusion, according to the calibration method based on point cloud data and an image provided in this embodiment of this application, an image capture device can be automatically calibrated without manual participation. This effectively improves calibration efficiency of the image capture device. In addition, the distance between the potential risk target and the electric power transmission shown in the image can be effectively calculated based on an extrinsic parameter of the image capture device obtained through calibration, to remind the operation and maintenance personnel to process, in time, the potential risk target that may affect running of the electric power transmission.

In addition, in the calibration method provided in this embodiment of this application, calibration is implemented based on geometric features extracted from point cloud data and the image, so that the image capture device in the electric power transmission scenario can be more effectively calibrated. This improves calibration accuracy of the image capture device.

For example, FIG. 14 is a diagram of comparison between fields of views before and after a camera drifts according to an embodiment of this application. As shown in FIG. 14, because a camera used to photograph an electric power transmission is usually deployed outdoors, the camera is easily affected by a harsh outdoor environment (for example, wind and rain), and the camera drifts. When the camera drifts, a field of view observed by the camera also changes. For example, as shown in FIG. 14, the field of view observed before the camera drifts includes an electric power transmission in the middle, a road, and trees and buildings on both sides. After the camera drifts to the left, trees and a building on the right are no longer included in the field of view observed by the camera.

In this way, because the field of view observed by the camera changes, if the image capture device is manually calibrated by manually selecting a reference point, and a case in which the reference point cannot be photographed after the camera drifts is likely to occur, a manual calibration failure occurs. As shown in FIG. 14, it is assumed that a reference point selected before the camera drifts is a contact point between the building on the right and the ground. In this case, after the camera drifts, the camera cannot obtain the previously selected reference point through photographing, and consequently, the camera cannot be calibrated based on the reference point.

However, according to the calibration method based on point cloud data and an image provided in this embodiment of this application, even if the camera drifts, a geometric feature that meets a requirement can be collected from an image that is obtained through photographing after the camera drifts, and then matched with a geometric feature in the point cloud data, to calibrate the camera, and ensure that calibrating the camera is not affected by a case in which the camera drifts.

The foregoing describes in detail the calibration method based on point cloud data and an image provided in embodiments of this application. The following describes a device that is provided in embodiments of this application and that is configured to perform the foregoing method.

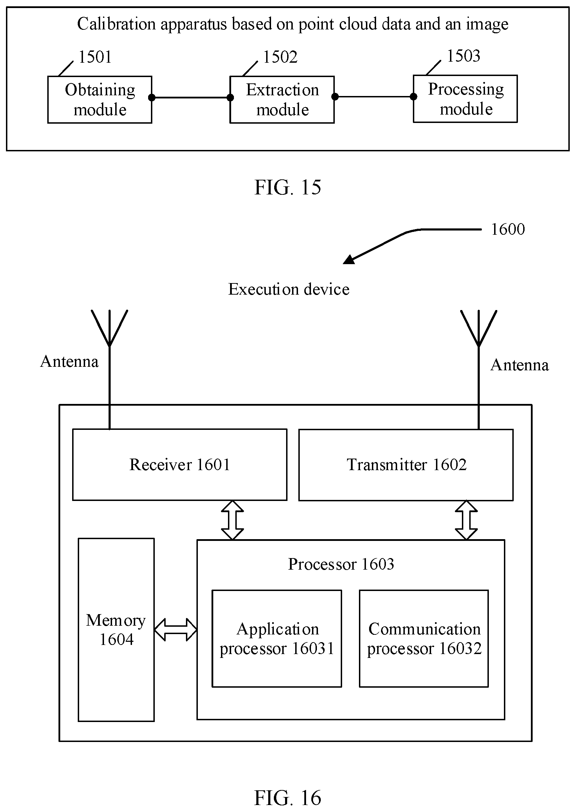

FIG. 15 is a diagram of a structure of a calibration apparatus based on point cloud data and an image according to an embodiment of this application. As shown in FIG. 15, an embodiment of this application provides the calibration apparatus based on point cloud data and an image, including: an obtaining module 1501, configured to obtain point cloud data and a first image, where the point cloud data and the first image are obtained by collecting an electric power transmission at different positions;

an extraction module 1502, configured to extract a geometric feature in the point cloud data and a geometric feature in the first image, to obtain a first geometric feature in the point cloud data and a second geometric feature in the first image, where the first geometric feature and the second geometric feature each are related to the electric power transmission, and the geometric feature in the point cloud data and the geometric feature in the first image include one or more of the following features: a depth-discontinuous line feature and a plane feature that is related to a pole tower of the electric power transmission; and

a processing module 1503, configured to determine, from the first geometric feature and the second geometric feature, a first target feature and a second target feature that have a correspondence, where the first target feature is a feature in the first geometric feature, and the second target feature is a feature in the second geometric feature, where the processing module 1503 is further configured to calculate an extrinsic parameter of an image capture device based on the first target feature and the second target feature, where the image capture device is configured to capture the first image, and the extrinsic parameter indicates a conversion relationship between the first target feature and the second target feature.

In a possible implementation, the processing module 1503 is further configured to:

convert a point in the first geometric feature into a pixel in an image by using a preset extrinsic parameter, to obtain a third geometric feature, where the preset extrinsic parameter is an extrinsic parameter preset by the image capture device;
determine a third target feature and the second target feature based on the third geometric feature and the second geometric feature, where the third target feature is a feature in the third geometric feature, and the third target feature and the second target feature are two features with a highest similarity between the third geometric feature and the second geometric feature; and
determine that the first target feature corresponding to the third target feature and the second target feature have a correspondence.

In a possible implementation, the first geometric feature includes a first line feature, and a difference between depth values of any two adjacent points in the first line feature is greater than a first threshold.
In a possible implementation, the first geometric feature includes a point feature; and
the extraction module 1502 is specifically configured to:

convert a point in the point cloud data into a pixel in an image by using a preset extrinsic parameter, to obtain a second image, where the preset extrinsic parameter is an extrinsic parameter preset by the image capture device; and
detect a point of interest in the second image, and determine a point, that is in the point cloud data and that corresponds to the point of interest, to obtain the first geometric feature.

In a possible implementation, the first geometric feature includes at least one three-dimensional plane feature, and the second geometric feature includes at least one two-dimensional plane feature; and
the processing module 1503 is specifically configured to:

convert the at least one three-dimensional plane feature into at least one two-dimensional projection plane feature by using the preset extrinsic parameter; and
match the at least one two-dimensional projection plane feature with the at least one two-dimensional plane feature, to determine the first target feature and the second target feature that match with each other, where the first target feature includes a feature in the at least one two-dimensional projection plane feature, and the second target feature includes a feature in the at least one two-dimensional plane feature.

In a possible implementation, the processing module 1503 is further configured to:

perform semantic segmentation on the point cloud data and the first image, to obtain a first semantic segmentation result corresponding to the point cloud data and a second semantic segmentation result corresponding to the first image;
filter out, based on the first semantic segmentation result, data of a preset category in the point cloud data, to obtain updated point cloud data; and
remove, based on the second semantic segmentation result, a part of the preset category in the first image, to obtain an updated first image; and
the extraction module 1502 is further configured to extract a geometric feature in the updated point cloud data and a geometric feature in the updated first image.

In a possible implementation, the first image includes a potential risk target; and

the processing module 1503 is further configured to determine a distance between the potential risk target and the electric power transmission based on the extrinsic parameter and a position of the potential risk target in the first image.

In a possible implementation, the obtaining module 1501 is further configured to obtain a third image, where the third image is a background image corresponding to the first image; and

the processing module 1503 is further configured to determine, based on the first image and the third image, the position of the potential risk target in the first image according to a background subtraction method.

In a possible implementation, the third image includes the electric power transmission and does not include the potential risk target; or

values of all pixels in the third image are a second threshold, and the second threshold is an average value of all pixel values in the first image.

In a possible implementation, the potential risk target includes a first part and a second part, one end of the first part is in perpendicular contact with the ground, the other end of the first part is connected to one end of the second part, and there is an included angle between the second part and a photographing plane of the first image;

the obtaining module 1501 is further configured to obtain a preset length corresponding to the second part, where the preset length is determined by identifying a category of the potential risk target; and

the processing module 1503 is further configured to:

determine a position of a potential risk point in a world coordinate system based on the extrinsic parameter, the preset length, and a length of the second part in the first image, where the potential risk point is located at the other end of the second part; and

determine a distance between the potential risk point and the electric power transmission based on the position of the potential risk point in the world coordinate system.

In a possible implementation, the processing module 1503 is further configured to mark the distance between the potential risk point and the electric power transmission in the first image.

In a possible implementation, the processing module 1503 is further configured to:

determine a potential risk range based on a position of the end of the second part in the world coordinate system and the preset length corresponding to the second part, where the potential risk range is a range that can be reached by the potential risk point, and the position of the end of the second part in the world coordinate system is determined based on the extrinsic parameter and a position of the end of the second part in the first image; and

calculate a distance between a point in the potential risk range and the electric power transmission, and generate first alarm information when the distance between the point in the potential risk range and the electric power transmission is less than a first safe distance.

In a possible implementation, the processing module 1503 is further configured to:

determine, based on the extrinsic parameter and a position of a contact point in the first image, a position of the contact point in the world coordinate system, where the contact point is a point at which the potential risk target is in contact with the ground; and

calculate, based on the position of the contact point in the world coordinate system, a distance between the contact point and an overhead power line protection area, and generate second alarm information when the distance between the contact point and the overhead power line protection area is less than a second safe distance.

FIG. 16 is a diagram of a structure of an execution device according to an embodiment of this application. An execution device 1600 may be specifically represented as a mobile phone, a tablet computer, a notebook computer, an intelligent wearable device, a server, or the like. This is not limited herein. Specifically, the execution device 1600 includes a receiver 1601, a transmitter 1602, a processor 1603, and a memory 1604 (where there may be one or more processors 1603 in the execution device 1600, and one processor is used as an example in FIG. 16). The processor 1603 may include an application processor 16031 and a communication processor 16032. In some embodiments of this application, the receiver 1601, the transmitter 1602, the processor 1603, and the memory 1604 may be connected through a bus or in another manner.

The memory 1604 may include a read-only memory and a random access memory, and provide instructions and data to the processor 1603. A part of the memory 1604 may further include a non-volatile random access memory (non-volatile random access memory, NVRAM). The memory 1604 stores a processor and operation instructions, executable modules or data structures, or a subset thereof, or an extended set thereof. The operation instructions may include various operation instructions for implementing various operations.

The processor 1603 controls an operation of the execution device. In a specific application, assemblies of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1603 or may be implemented by the processor 1603. The processor 1603 may be an integrated circuit chip and has a signal processing capability. In an implementation process, the steps in the foregoing method may be implemented by using a hardware integrated logic circuit in the processor 1603, or by using instructions in a form of software. The processor 1603 may be a general-purpose processor, a digital signal processor (digital signal processor, DSP), a microprocessor, or a microcontroller, or may include an application-specific integrated circuit (application-specific integrated circuit, ASIC), a field programmable gate array (field programmable gate array, FPGA) or another programmable logic device, a discrete gate or transistor logic device, or a discrete hardware assembly. The processor 1603 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor.

The receiver 1601 may be configured to receive input digital or character information, and generate a signal input related to a related setting and function control of the execution device. The transmitter 1602 may be configured to output digital or character information through a first interface. The transmitter 1602 may be further configured to send an instruction to a disk group through the first interface, to modify data in the disk group. The transmitter 1602 may further include a display device, for example, a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the model hyperparameter selection method described in embodiments, or a chip in a training device performs the model hyperparameter selection method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

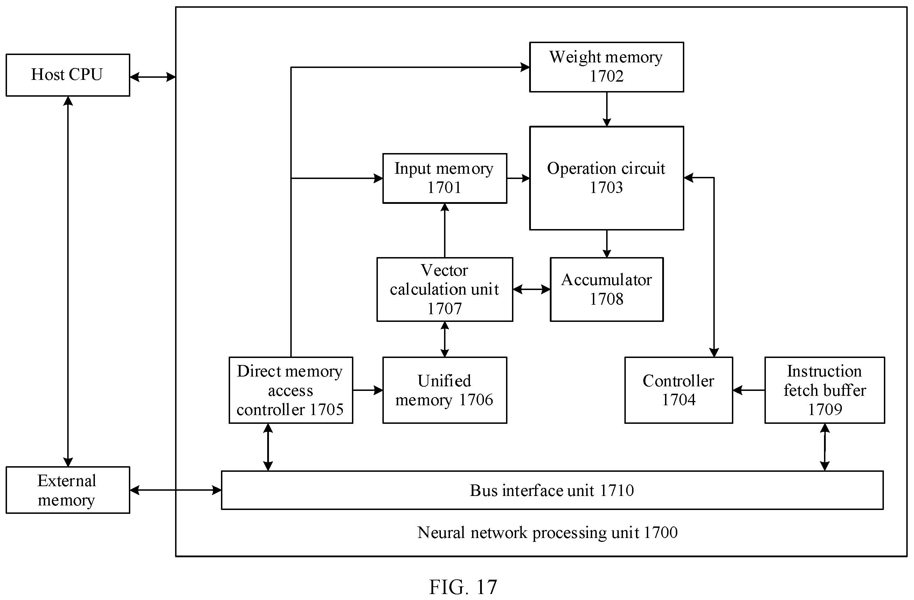

Specifically, FIG. 17 is a diagram of a structure of a chip according to an embodiment of this application. The chip may be represented as a neural network processing unit NPU 1700. The NPU 1700 is mounted to a host CPU (Host CPU) as a coprocessor, and a task is allocated by the host CPU. A core part of the NPU is an operation circuit 1703. A controller 1704 controls the operation circuit 1703 to extract matrix data in a memory and performs a multiplication operation.

In some implementations, the operation circuit 1703 includes a plurality of processing units (Process Engine, PE) inside. In some implementations, the operation circuit 1703 is a two-dimensional systolic array. The operation circuit 1703 may alternatively be a one-dimensional systolic array or another electronic circuit that can perform mathematical operation such as multiplication and addition. In some implementations, the operation circuit 1703 is a general-purpose matrix processor.

For example, it is assumed that there is an input matrix A, a weight matrix B, and an output matrix C. The operation circuit obtains data corresponding to the matrix B from a weight memory 1702, and buffers the data on each PE in the operation circuit. The operation circuit obtains data of the matrix A from an input memory 1701 and performs matrix operation with the matrix B, and stores a partial result or a final result of an obtained matrix into an accumulator (accumulator) 1708.

A unified memory 1706 is configured to store input data and output data. Weight data is directly transferred to the weight memory 1702 through a direct memory access controller DMAC (Direct Memory Access Controller, DMAC) 1705. The input data is also transferred to the unified memory 1706 through the DMAC.

A BIU is a bus interface unit, namely, a bus interface unit 1710, and is configured to perform interaction between an AXI bus, and the DMAC and an instruction fetch buffer (Instruction Fetch Buffer, IFB) 1709.

The bus interface unit (Bus Interface Unit, BIU) 1710 is used by the instruction fetch buffer 1709 to obtain instructions from an external memory, and is further used by the direct memory access controller 1705 to obtain original data of the input matrix A or the weight matrix B from the external memory.

The DMAC is mainly configured to: transfer input data in the external memory DDR to the unified memory 1706, transfer weight data to the weight memory 1702, or transfer input data to the input memory 1701.

A vector calculation unit 1707 includes a plurality of operation processing units, and when necessary, performs further processing on an output of the operation circuit 1703, for example, vector multiplication, vector addition, exponential operation, logarithm operation, and size comparison. The vector calculation unit 1707 is mainly used for non-convolutional/fully connected layer network computation in a neural network, such as batch normalization (batch normalization), pixel-level summation, and upsampling on a feature map.

In some implementations, the vector calculation unit 1707 can store processed output vectors into the unified memory 1706. For example, the vector calculation unit 1707 may apply a linear function or a nonlinear function to the output of the operation circuit 1703, for example, perform linear interpolation on a feature map extracted from a convolutional layer, and for another example, obtain a vector of an accumulated value to generate an activation value. In some implementations, the vector calculation unit 1707 generates a normalized value, a pixel-level sum value, or both. In some implementations, the processed output vectors can be used as an activation input to the operation circuit 1703, for example, the processed output vector can be used at a subsequent layer of the neural network.

The instruction fetch buffer (instruction fetch buffer) 1709 connected to the controller 1704 is configured to store instructions used by the controller 1704.

The unified memory 1706, the input memory 1701, the weight memory 1702, and the instruction fetch buffer 1709 are all on-chip memories. The external memory is private to a hardware architecture of the NPU.

Any one of the processors mentioned above may be a general-purpose central processing unit, a microprocessor, an ASIC, or one or more integrated circuits for controlling program execution.

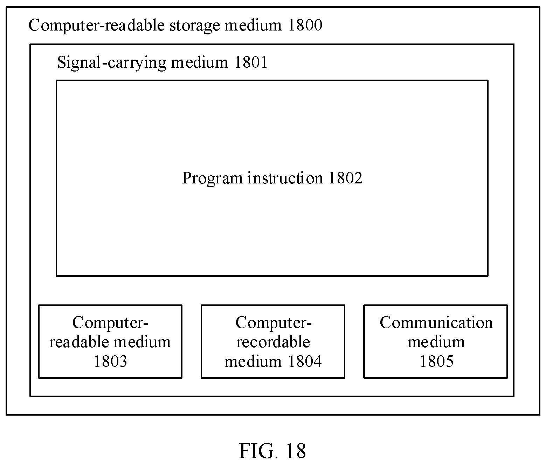

FIG. 18 is a diagram of a structure of a computer-readable storage medium according to an embodiment of this application. This application further provides a computer-readable storage medium. In some embodiments, the foregoing method disclosed in FIG. 3 may be implemented as computer program instructions encoded in a machine readable format on the computer-readable storage medium or encoded in another non-transitory medium or product.

FIG. 18 schematically shows a conceptual partial view of an example computer-readable storage medium arranged according to at least some embodiments shown herein. The example computer-readable storage medium includes a computer program for executing a computer process on a computing device.

In an embodiment, a computer-readable storage medium 1800 is provided by using a signal-carrying medium 1801. The signal-carrying medium 1801 may include one or more program instructions 1802, and when one or more program instructions 1802 are run by one or more processors, the foregoing functions or some functions described in FIG. 3 may be provided. Therefore, for example, with reference to the embodiment shown in FIG. 3, one or more features of steps 301 to 304 may be undertaken by one or more instructions associated with the signal-carrying medium 1801. In addition, the program instruction 1802 in FIG. 18 also describes an example instruction.

In some examples, the signal-carrying medium 1801 may include a computer-readable medium 1803, for example but not limited to, a hard disk drive, a compact disc (CD), a digital video disc (DVD), a digital tape, a memory, a ROM, or a RAM.

In some implementations, the signal-carrying medium 1801 may include a computer-recordable medium 1804, for example but not limited to, a memory, a read/write (R/W) CD, or an R/W DVD. In some implementations, the signal-carrying medium 1801 may include a communication medium 1805, for example but not limited to, a digital and/or analog communication medium (for example, an optical fiber, a waveguide, a wired communication link, or a wireless communication link). Therefore, for example, the signal-carrying medium 1801 may communicate by the communication medium 1805 in a wireless form (for example, a wireless communication medium that complies with the IEEE 802.11 standard or another transmission protocol).

The one or more program instructions 1802 may be, for example, one or more computer-executable instructions or logic implementation instructions. In some examples, a computing device may be configured to provide various operations, functions, or actions in response to the program instructions 1802 transmitted to the computing device by using one or more of the computer-readable medium 1803, the computer-recordable medium 1804, and/or the communication medium 1805.

In addition, it should be noted that the apparatus embodiments described above are only examples. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is only an example. For example, division into the units is only logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A calibration method based on point cloud data and an image, comprising:

   obtaining point cloud data and a first image, wherein the point cloud data and the first image are obtained by collecting an electric power transmission at different positions;
   extracting a geometric feature in the point cloud data and a geometric feature in the first image, to obtain a first geometric feature in the point cloud data and a second geometric feature in the first image, wherein the first geometric feature and the second geometric feature each are related to the electric power transmission, and the geometric feature in the point cloud data and the geometric feature in the first image comprise one or more of the following features: a depth-discontinuous line feature and a plane feature that is related to a pole tower of the electric power transmission;

determining, from the first geometric feature and the second geometric feature, a first target feature and a second target feature that have a correspondence, wherein the first target feature is a feature in the first geometric feature, and the second target feature is a feature in the second geometric feature; and

calculating an extrinsic parameter of an image capture device based on the first target feature and the second target feature, wherein the image capture device is configured to capture the first image, and the extrinsic parameter indicates a conversion relationship between the first target feature and the second target feature.

2. The method according to claim 1, wherein the determining, from the first geometric feature and the second geometric feature, a first target feature and a second target feature that have a correspondence comprises:

converting a point in the first geometric feature into a pixel in an image by using a preset extrinsic parameter, to obtain a third geometric feature, wherein the preset extrinsic parameter is an extrinsic parameter preset by the image capture device;

determining a third target feature and the second target feature based on the third geometric feature and the second geometric feature, wherein the third target feature is a feature in the third geometric feature, and the third target feature and the second target feature are two features with a highest similarity between the third geometric feature and the second geometric feature; and

determining that the first target feature corresponding to the third target feature and the second target feature have a correspondence.

3. The method according to claim 1 or 2, wherein the first geometric feature comprises a first line feature, and a difference between depth values of any two adjacent points in the first line feature is greater than a first threshold.

4. The method according to any one of claims 1 to 3, wherein the first geometric feature comprises at least one three-dimensional plane feature, and the second geometric feature comprises at least one two-dimensional plane feature; and

the determining, from the first geometric feature and the second geometric feature, a first target feature and a second target feature that have a correspondence comprises:

converting the at least one three-dimensional plane feature into at least one two-dimensional projection plane feature by using the preset extrinsic parameter; and

matching the at least one two-dimensional projection plane feature with the at least one two-dimensional plane feature, to determine the first target feature and the second target feature that match with each other, wherein the first target feature comprises a feature in the at least one two-dimensional projection plane feature, and the second target feature comprises a feature in the at least one two-dimensional plane feature.

5. The method according to any one of claims 1 to 4, wherein the method further comprises:

performing semantic segmentation on the point cloud data and the first image, to obtain a first semantic segmentation result corresponding to the point cloud data and a second semantic segmentation result corresponding to the first image;

filtering out, based on the first semantic segmentation result, data of a preset category in the point cloud data, to obtain updated point cloud data; and

removing, based on the second semantic segmentation result, a part of the preset category in the first image, to obtain an updated first image; and

the extracting a geometric feature in the point cloud data and a geometric feature in the first image comprises: extracting geometric features in the updated point cloud data and the updated first image.

6. The method according to any one of claims 1 to 5, wherein the first image comprises a potential risk target; and the method further comprises:

determining a distance between the potential risk target and the electric power transmission based on the extrinsic parameter and a position of the potential risk target in the first image.

7. The method according to claim 6, wherein the method further comprises:

    obtaining a third image, wherein the third image is a background image corresponding to the first image; and determining, based on the first image and the third image, the position of the potential risk target in the first image according to a background subtraction method.

8. The method according to claim 7, wherein the third image comprises the electric power transmission and does not comprise the potential risk target; or
   values of all pixels in the third image are a second threshold, and the second threshold is an average value of all pixel values in the first image.

9. The method according to any one of claims 6 to 8, wherein the potential risk target comprises a first part and a second part, one end of the first part is in perpendicular contact with the ground, the other end of the first part is connected to one end of the second part, and there is an included angle between the second part and a photographing plane of the first image; and
   the determining a distance between the potential risk target and the electric power transmission comprises:

    obtaining a preset length corresponding to the second part, wherein the preset length is determined by identifying a category of the potential risk target;
    determining a position of a potential risk point in a world coordinate system based on the extrinsic parameter, the preset length, and a length of the second part in the first image, wherein the potential risk point is located at the other end of the second part; and
    determining a distance between the potential risk point and the electric power transmission based on the position of the potential risk point in the world coordinate system.

10. The method according to claim 9, wherein the distance between the potential risk point and the electric power transmission is marked in the first image.

11. The method according to claim 9 or 10, wherein the method further comprises:

    determining a potential risk range based on a position of the end of the second part in the world coordinate system and the preset length corresponding to the second part, wherein the potential risk range is a range that can be reached by the potential risk point, and the position of the end of the second part in the world coordinate system is determined based on the extrinsic parameter and a position of the end of the second part in the first image; and
    calculating a distance between a point in the potential risk range and the electric power transmission, and generating first alarm information when the distance between the point in the potential risk range and the electric power transmission is less than a first safe distance.

12. The method according to any one of claims 9 to 11, wherein the method further comprises:

    determining, based on the extrinsic parameter and a position of a contact point in the first image, a position of the contact point in the world coordinate system, wherein the contact point is a point at which the potential risk target is in contact with the ground; and
    calculating, based on the position of the contact point in the world coordinate system, a distance between the contact point and an overhead power line protection area, and generating second alarm information when the distance between the contact point and the overhead power line protection area is less than a second safe distance.

13. A calibration apparatus based on point cloud data and an image, comprising:

    an obtaining module, configured to obtain point cloud data and a first image, wherein the point cloud data and the first image are obtained by collecting an electric power transmission at different positions;
    an extraction module, configured to extract a geometric feature in the point cloud data and a geometric feature in the first image, to obtain a first geometric feature in the point cloud data and a second geometric feature in the first image, wherein the first geometric feature and the second geometric feature each are related to the electric power transmission, and the geometric feature in the point cloud data and the geometric feature in the first image comprise one or more of the following features: a depth-discontinuous line feature and a plane feature that is related to a pole tower of the electric power transmission; and

a processing module, configured to determine, from the first geometric feature and the second geometric feature, a first target feature and a second target feature that have a correspondence, wherein the first target feature is a feature in the first geometric feature, and the second target feature is a feature in the second geometric feature, wherein

the processing module is further configured to calculate an extrinsic parameter of an image capture device based on the first target feature and the second target feature, wherein the image capture device is configured to capture the first image, and the extrinsic parameter indicates a conversion relationship between the first target feature and the second target feature.

**14.** The apparatus according to claim 13, wherein the processing module is further configured to:

convert a point in the first geometric feature into a pixel in an image by using a preset extrinsic parameter, to obtain a third geometric feature, wherein the preset extrinsic parameter is an extrinsic parameter preset by the image capture device;

determine a third target feature and the second target feature based on the third geometric feature and the second geometric feature, wherein the third target feature is a feature in the third geometric feature, and the third target feature and the second target feature are two features with a highest similarity between the third geometric feature and the second geometric feature; and

determine that the first target feature corresponding to the third target feature and the second target feature have a correspondence.

**15.** The apparatus according to any one of claims 13 to 14, wherein the first geometric feature comprises a first line feature, and a difference between depth values of any two adjacent points in the first line feature is greater than a first threshold.

**16.** The apparatus according to any one of claims 13 to 15, wherein the first geometric feature comprises at least one three-dimensional plane feature, and the second geometric feature comprises at least one two-dimensional plane feature; and
the processing module is specifically configured to:

convert the at least one three-dimensional plane feature into at least one two-dimensional projection plane feature by using the preset extrinsic parameter; and

match the at least one two-dimensional projection plane feature with the at least one two-dimensional plane feature, to determine the first target feature and the second target feature that match with each other, wherein the first target feature comprises a feature in the at least one two-dimensional projection plane feature, and the second target feature comprises a feature in the at least one two-dimensional plane feature.

**17.** The apparatus according to any one of claims 13 to 16, wherein the processing module is further configured to:

perform semantic segmentation on the point cloud data and the first image, to obtain a first semantic segmentation result corresponding to the point cloud data and a second semantic segmentation result corresponding to the first image;

filter out, based on the first semantic segmentation result, data of a preset category in the point cloud data, to obtain updated point cloud data; and

remove, based on the second semantic segmentation result, a part that is the preset category and that is in the first image, to obtain an updated first image; and

the extraction module is further configured to extract a geometric feature in the updated point cloud data and a geometric feature in the updated first image.

**18.** The apparatus according to any one of claims 13 to 17, wherein the first image comprises a potential risk target; and
the processing module is further configured to determine a distance between the potential risk target and the electric power transmission based on the extrinsic parameter and a position of the potential risk target in the first image.

**19.** The apparatus according to claim 18, wherein

the obtaining module is further configured to obtain a third image, wherein the third image is a background image corresponding to the first image; and

the processing module is further configured to determine, based on the first image and the third image, the position of the potential risk target in the first image according to a background subtraction method.

20. The apparatus according to claim 19, wherein the third image comprises the electric power transmission and does not comprise the potential risk target; or
values of all pixels in the third image are a second threshold, and the second threshold is an average value of all pixel values in the first image.

21. The apparatus according to any one of claims 18 to 20, wherein the potential risk target comprises a first part and a second part, one end of the first part is in perpendicular contact with the ground, the other end of the first part is connected to one end of the second part, and there is an included angle between the second part and a photographing plane of the first image;

the obtaining module is further configured to obtain a preset length corresponding to the second part, wherein the preset length is determined by identifying a category of the potential risk target; and
the processing module is further configured to:

determine a position of a potential risk point in a world coordinate system based on the extrinsic parameter, the preset length, and a length of the second part in the first image, wherein the potential risk point is located at the other end of the second part; and
determine a distance between the potential risk point and the electric power transmission based on the position of the potential risk point in the world coordinate system.

22. The apparatus according to claim 21, wherein the processing module is further configured to mark the distance between the potential risk point and the electric power transmission in the first image.

23. The apparatus according to claim 21 or 22, wherein the processing module is further configured to:

determine a potential risk range based on a position of the end of the second part in the world coordinate system and the preset length corresponding to the second part, wherein the potential risk range is a range that can be reached by the potential risk point, and the position of the end of the second part in the world coordinate system is determined based on the extrinsic parameter and a position of the end of the second part in the first image; and
calculate a distance between a point in the potential risk range and the electric power transmission, and generate first alarm information when the distance between the point in the potential risk range and the electric power transmission is less than a first safe distance.

24. The apparatus according to any one of claims 21 to 23, wherein the processing module is further configured to:

determine, based on the extrinsic parameter and a position of a contact point in the first image, a position of the contact point in the world coordinate system, wherein the contact point is a point at which the potential risk target is in contact with the ground; and
calculate, based on the position of the contact point in the world coordinate system, a distance between the contact point and an overhead power line protection area, and generate second alarm information when the distance between the contact point and the overhead power line protection area is less than a second safe distance.

25. A calibration apparatus based on point cloud data and an image, comprising a memory and a processor, wherein the memory stores code, the processor is configured to execute the code, and when the code is executed, the apparatus performs the method according to any one of claims 1 to 12.

26. A computer storage medium, wherein the computer storage medium stores instructions, and when the instructions are executed by a computer, the computer is enabled to perform the method according to any one of claims 1 to 12.

27. A computer program product, wherein the computer program product stores instructions, and when the instructions are executed by a computer, the computer is enabled to perform the method according to any one of claims 1 to 12.

FIG. 1A

Point cloud data

Uncrewed
aerial vehicle

Image

Camera

Terminal device

FIG. 1B

FIG. 2

| | |
|---|---|
| Obtain point cloud data and a first image, where the point cloud data and the first image are obtained by collecting an electric power transmission at different positions | 301 |
| Extract a geometric feature in the point cloud data and a geometric feature in the first image, to obtain a first geometric feature in the point cloud data and a second geometric feature in the first image, where the first geometric feature and the second geometric feature each are related to the electric power transmission | 302 |
| Determine, from the first geometric feature and the second geometric feature, a first target feature and a second target feature that have a correspondence, where the first target feature is a feature in the first geometric feature, and the second target feature is a feature in the second geometric feature | 303 |
| Calculate an extrinsic parameter of an image capture device based on the first target feature and the second target feature, where the image capture device is configured to capture the first image, and the extrinsic parameter indicates a conversion relationship between the first target feature and the second target feature | 304 |

FIG. 3

Plane feature

Point feature

Line feature

FIG. 4

Depth-discontinuous line feature

Depth-continuous line feature

FIG. 5

Transmission
conducting wire

Point cloud
semantic
segmentation
network

Pole
tower

Trees

FIG. 6

Transmission
conducting wires

11:59:11

Image semantic
segmentation
network

11:59:11

Pole
tower

Trees

FIG. 7

Obtain a third image, where the third image is a background image corresponding to a first image

305

Determine, based on the first image and the third image, a position of a potential risk target in the first image according to a background subtraction method

306

Determine a distance between the potential risk target and an electric power transmission based on an extrinsic parameter and the position of the potential risk target in the first image

307

FIG. 8

First image

11:59:11

Threshold T

Potential risk target

11:59:11

Third image

FIG. 9

Image point A'

Image length l'

Optical center O

Depth x

Focal length f

Physical length l

Physical point A

FIG. 10

A crane arm tilts forward relative to a photographing plane

A crane arm is parallel to a photographing plane

A crane arm tilts backward relative to a photographing plane

FIG. 11

FIG. 12

D=3.0 m

D=15.0 m

FIG. 13

Field of view observed
after a camera drifts

Field of view observed
before the camera drifts

11:59:11

Manually selected reference
point in manual calibration

FIG. 14

Calibration apparatus based on point cloud data and an image

1501    1502    1503

| Obtaining module | Extraction module | Processing module |

FIG. 15

1600

Execution device

Antenna                    Antenna

Receiver 1601          Transmitter 1602

Processor 1603

| Memory 1604 | Application processor 16031 | Communication processor 16032 |

FIG. 16

Host CPU

External
memory

Weight memory
1702

Input memory
1701

Operation circuit
1703

Vector
calculation unit
1707

Accumulator
1708

Direct memory
access
controller 1705

Unified
memory 1706

Controller
1704

Instruction
fetch buffer
1709

Bus interface unit 1710

Neural network processing unit 1700

FIG. 17

Computer-readable storage medium 1800

Signal-carrying medium 1801

Program instruction 1802

| Computer-readable medium 1803 | Computer-recordable medium 1804 | Communication medium 1805 |
|---|---|---|

FIG. 18

## INTERNATIONAL SEARCH REPORT

| International application No. |
|---|
| **PCT/CN2023/130982** |

**A. CLASSIFICATION OF SUBJECT MATTER**

G06T 7/80(2017.01)i; G06V 10/44(2022.01)i

According to International Patent Classification (IPC) or to both national classification and IPC

**B. FIELDS SEARCHED**

Minimum documentation searched (classification system followed by classification symbols)

IPC: G06T, G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE, CJFD: 转换, 标定, 外参数, 差, 点云, 面, 深度, 图像, 线, 转换, 电线, 面, 几何, 结构, 杆, 映射, 对应, 关联, 关系, 隐患目标, 距离, conver+, calibrat+, external, parameter?, differen +, point, cloud, surface, depth, image, line, wire, geometry, structure, pole, map+, corresponden+, associate+, relation, hidden, dangerous, target?, distance

**C. DOCUMENTS CONSIDERED TO BE RELEVANT**

| Category* | Citation of document, with indication, where appropriate, of the relevant passages | Relevant to claim No. |
|---|---|---|
| Y | CN 114743021 A (STATE GRID JIANGSU ELECTRIC POWER CO., LTD. TAIZHOU POWER SUPPLY BRANCH et al.) 12 July 2022 (2022-07-12) description, paragraphs [0067]-[0148] and [0189]-[0195], and figures 1-11 | 1, 3-8, 13, 15-20, 25-27 |
| Y | CN 111709981 A (GAO XIAOLING) 25 September 2020 (2020-09-25) description, paragraphs [0007]-[0109], and figures 1-7 | 1, 3-8, 13, 15-20, 25-27 |
| Y | CN 113345019 A (SHANDONG SENTER ELECTRONIC CO., LTD.) 03 September 2021 (2021-09-03) description, paragraphs [0069]-[0131], and figures 1-8 | 6-8, 18-20 |
| A | US 11099275 B1 (TSINGHUA UNIVERSITY) 24 August 2021 (2021-08-24) entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 January 2024** | **23 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/130982**

| Patent document cited in search report | | | Publication date (day/month/year) | Patent family member(s) | | | Publication date (day/month/year) |
|---|---|---|---|---|---|---|---|
| CN | 114743021 | A | 12 July 2022 | None | | | |
| CN | 111709981 | A | 25 September 2020 | None | | | |
| CN | 113345019 | A | 03 September 2021 | None | | | |
| US | 11099275 | B1 | 24 August 2021 | CN | 111553859 | A | 18 August 2020 |

Form PCT/ISA/210 (patent family annex) (July 2022)

**REFERENCES CITED IN THE DESCRIPTION**

**Patent documents cited in the description**

- CN 202211413951